(19) Europäisches Patentamt
European Patent Office
Office européen des brevets

(11) **EP 1 116 676 B1**

(12) **FASCICULE DE BREVET EUROPEEN**

(45) Date de publication et mention
de la délivrance du brevet:
**14.11.2007 Bulletin 2007/46**

(51) Int Cl.:
*B65G 47/08* *(2006.01)*     *B65G 47/32* *(2006.01)*
*B65G 19/02* *(2006.01)*     *B65B 49/00* *(2006.01)*
*B65B 43/42* *(2006.01)*     *B65B 41/02* *(2006.01)*
*B65B 43/52* *(2006.01)*

(21) Numéro de dépôt: **00403688.5**

(22) Date de dépôt: **27.12.2000**

(54) **Installation pour la constitution de lots d'articles**

Vorrichtung zum Bildung von Gruppen von Artikeln

Apparatus for forming article batches

(84) Etats contractants désignés:
**AT BE CH CY DE DK ES FI FR GB GR IE IT LI LU
MC NL PT SE TR**

(30) Priorité: **29.12.1999 FR 9916658
29.12.1999 FR 9916660
21.06.2000 FR 0007945**

(43) Date de publication de la demande:
**18.07.2001 Bulletin 2001/29**

(73) Titulaire: **ARIES PACKAGING
10430 Rosières-près-Troyes (FR)**

(72) Inventeurs:
• **de Guglielmo, Pascal
10300 Montgueux (FR)**
• **Cartier, Alain
10190 Fontvannes (FR)**
• **Ferry, José
10150 Luyeres (FR)**
• **Moroy, Thierry
10120 Saint Germain (FR)**

(74) Mandataire: **Geismar, Thierry
BREDEMA
38, avenue de l'Opéra
75002 Paris (FR)**

(56) Documents cités:
**BE-A- 834 189**          **DE-A- 3 129 723**
**GB-A- 955 622**          **US-A- 3 845 852**
**US-A- 4 274 533**        **US-A- 5 070 995**
**US-A- 5 724 785**        **US-A- 5 979 147**

**Description**

L'invention concerne une installation de conditionnement pour former des produits finis tels que des packs à partir de lots d'articles.

L'invention s'applique notamment au conditionnement d'articles tels que des bouteilles ou des canettes, généralement de forme cylindrique.

Il est connu que les articles sont d'abord acheminés individuellement sur une voie d'alimentation jusqu'à un poste de groupage où des lots d'articles sont formés puis espacés pour être transférés vers une voie d'évacuation le long de laquelle ils sont emballés, ou empaquetés.

Pour former un espace entre deux lots d'articles successifs, il est connu d'accélérer les lots d'articles entre la voie d'alimentation et la voie d'évacuation.

On peut citer notamment le document GB-974 995.

L'espace alors formé entre les mêmes faces de deux lots consécutifs est appelé « pas » ou « pas machine ».

Du fait de la conservation du débit de la machine, il est aisé d'établir entre la vitesse linéaire de sortie d'un article et sa vitesse d'entrée, la relation suivante:

$$VS = VE \times \frac{P}{L} \qquad\qquad (1)$$

où *VS* est la vitesse de sortie de l'article, *VE* sa vitesse d'entrée, *P* le pas machine et L la longueur d'un lot d'articles.

Les distributeurs cherchent à l'heure actuelle à diminuer leurs stocks tout en proposant des gammes de produits emballés toujours plus diversifiées.

Il en résulte que les débits des machines de conditionnement doivent être continuellement revus à la hausse. Ainsi, dans le domaine du conditionnement des bouteilles ou des canettes, on atteint à l'heure actuelle des débits de l'ordre de 15 000 à 100 000 bouteilles par heure.

Par ailleurs, les distributeurs exigent de pouvoir varier leur offre au sein d'une même gamme de produit, en proposant aux consommateurs, pour un même article tel qu'une bouteille ou une canette remplie de boisson, des conditionnements variés tels que des packs de deux, de trois, de quatre, de six, de huit articles ou plus.

Afin de répondre à ces exigences, les constructeurs doivent être en mesure de renouveler sans cesse leurs gammes de machines, de sorte à les adapter non seulement aux formes des nouveaux produits, à leurs tailles, à leurs poids, mais également à la taille et à la forme de leurs emballage, le plus souvent des flans en carton ou équivalent.

Actuellement, les constructeurs proposent aux distributeurs des solutions ou des machines de conditionnement qui présentent de nombreux inconvénients.

Certains constructeurs proposent aux distributeurs une machine pour chaque type de produit fini, ce qui est lourd et coûteux.

Dans le US-A-5 979 147, notamment, une variation de la vitesse d'alimentation ne suffit pas pour effectuer une modification du type de lot, c'est à dire du nombre de bouteilles par lot.

D'autres fabriquants proposent quant à eux une machine pour chaque gamme de produit, ce qui nécessite de régler la machine selon le type de conditionnement souhaité : lots de deux, de quatre, de six, de huit, ou plus.

En effet, à débit machine constant (donc à vitesse d'entrée constante), il y a lieu d'adapter la vitesse de sortie et/ou le pas machine, de par de la relation rappelée plus haut.

La plupart des machines ne présentent pas de système de réglage du pas. Il est donc nécessaire d'augmenter la vitesse de sortie, le pas étant fixe quel que soit le nombre d'articles par lot.

Ainsi, passer par exemple d'un groupage par lots de douze articles à un groupage par lots de quatre nécessite de tripler la vitesse de sortie de la machine, ce qui est incompatible avec les limites physiques des installations, et en particulier des dispositifs d'emballage.

Certaines machines présentent des systèmes manuels de réglage du pas, ce qui nécessite autant d'interventions manuelles qu'il y a de changements de produit au sein d'une même gamme.

A l'heure actuelle, la fréquence de ces changements peut atteindre deux à trois par jour, fréquence difficile à atteindre au moyen de réglages manuels.

L'invention vise à résoudre notamment les inconvénients précités de l'art antérieur, en proposant une installation qui permette le réglage automatique à la fois du nombre d'articles par lot, du pas machine, et de la cadence de production.

A cet effet, l'objet de l'invention est une installation de conditionnement former des produits finis tels que des packs à partir de lots d'articles, qui comprend :

- un convoyeur apte à recevoir les lots d'articles successifs pour les acheminer depuis une localisation dite amont vers une localisation dite aval, les faces amont de deux lots successifs étant espacées d'une distance prédéterminée dite pas ;

- une voie d'avancement le long de laquelle les articles sont acheminés un à un vers le dit convoyeur en étant juxtaposés les uns aux autres ;
- des moyens de transfert des articles depuis la voie d'avancement vers le convoyeur, aptes à prendre et grouper les articles pour former des lots espacés ;
- un transporteur apte d'une part à acheminer un par un des flans en carton ou équivalent, posés sensiblement à plat sur le transporteur, vers le dit convoyeur, et à disposer les flans sur le convoyeur en regard des lots d'articles ;
- des moyens d'entraînement du convoyeur, des moyens de transfert et du transporteur.

L'installation est caractérisée en ce qu'elle comprend un dispositif de commande et d'asservissement des moyens d'entraînement, apte à appliquer à chaque moyen d'entraînement un profil de vitesse choisi parmi un ensemble pré-programmé de profils de vitesses, pour permettre le réglage du pas et/ou du nombre d'articles par lots en fonction du pas et/ou du type de lot souhaités.

A chaque type de conditionnement correspond un profil de vitesse pour chacun des moyens d'entraînement.

En programmant à l'avance ces profils de vitesse, il est donc possible de passer automatiquement de l'un à l'autre, de sorte que le réglage de la machine est aisé et rapide.

Il est ainsi possible de passer immédiatement d'un type de conditionnement à un autre, par exemple d'un conditionnement par lots de huit à un conditionnement par lots de quatre, en maintenant la vitesse de sortie constante.

Selon un mode de réalisation, cette installation comprend en outre:

- des moyens adjacents à la voie d'avancement et aux moyens de transfert, aptes à ordonner et cadencer les articles en provenance de la voie d'avancement pour qu'ils présentent le positionnement et l'écartement voulus au moment de leur préhension par les moyens de transfert ; et
- un moyen d'entraînement des moyens pour ordonner et cadencer les articles, asservi au dispositif de commande.

Selon un mode de réalisation, lesdits moyens de transfert comprennent une roue dentée dont une partie au moins est montée pivotante autour d'un axe de rotation, cette roue étant disposée à proximité de la voie d'alimentation et de la voie d'évacuation, sensiblement tangente à celles-ci, cette roue comprenant les dits organes de préhension.

Les organes de préhension se présentent par exemple sous la forme de dents sensiblement régulièrement espacées, saillant radialement de la roue dentée, chaque dent décrivant un cercle en passant par une première position angulaire dans laquelle elle engage au moins un article au poste d'alimentation, et une deuxième position angulaire dans laquelle elle désengage celui-ci au poste d'évacuation.

Selon un mode de réalisation, la roue comprend un socle fixe circulaire ainsi qu'un disque rotatif, coaxiaux et superposés, entre lesquels sont disposées des branches radiales dont les extrémités libres forment les dites dents.

Selon une disposition constructive particulière, les dites branches sont montées à rotation sur le disque au moyen de pivots d'axes parallèles à l'axe de la roue.

Par exemple, chaque branche comporte un galet ou un ergot qui coopère avec une gorge ménagée dans le socle, cette gorge étant étendue en boucle fermée autour de l'axe de rotation de la roue.

Cette gorge est agencée pour que :

- lors du passage de la dent par le poste d'alimentation, la branche qui la porte pivote dans le sens contraire de la rotation de la roue pour que la vitesse de la dent diminue jusqu'à être sensiblement égale à la vitesse d'entrée lors de l'engagement des articles ;
- entre le poste d'alimentation et le poste d'évacuation, l'orientation de ladite branche est constante par rapport à la roue pour que la vitesse de la dent augmente jusqu'à être sensiblement égale à la vitesse de la roue, de sorte que les articles sont groupés en lots, accélérés, espacés.

Peuvent en outre être prévus des moyens disposés à proximité du poste d'alimentation, aptes à ordonner et cadencer les articles en provenance de la voie d'alimentation, pour qu'ils présentent le positionnement et l'écartement voulus au moment de leur préhension par les moyens de transfert.

Selon un mode de réalisation, le dit transporteur comprend des poussoirs des flans agencés successivement sur le transporteur, chaque poussoir étant apte à venir en prise avec un flan pour l'acheminer vers le convoyeur, la distance entre deux poussoirs successifs en prise avec un flan étant prédéterminée et sensiblement égale au pas.

On peut en outre prévoir :

- des moyens de réglage de la distance entre deux poussoirs successifs en prise avec un flan selon une valeur prédéterminée choisie parmi un groupe de valeurs pré-programmées, toutes multiples d'une même valeur dite module.

- un moyen d'entraînement des moyens de réglage, asservi au dispositif de commande.

Selon un mode de réalisation, le dispositif de commande est agencé pour appliquer à au moins l'un des moyens d'entraînement, et par exemple à chaque moyen d'entraînement, un profil de vitesse prédéterminé, choisi parmi un ensemble pré-programmé de profils de vitesse.

A cette fin, le ou chaque moyen d'entraînement peut comprendre un moteur dont la vitesse de rotation est réglable de façon continue, tel qu'un moteur électrique, du type à courant continu sans balais.

D'autres objets et avantages- de -l'invention- apparaîtront au cours de la description qui va suivre de modes de réalisation, description faite en référence aux dessins annexés, dans lesquels :

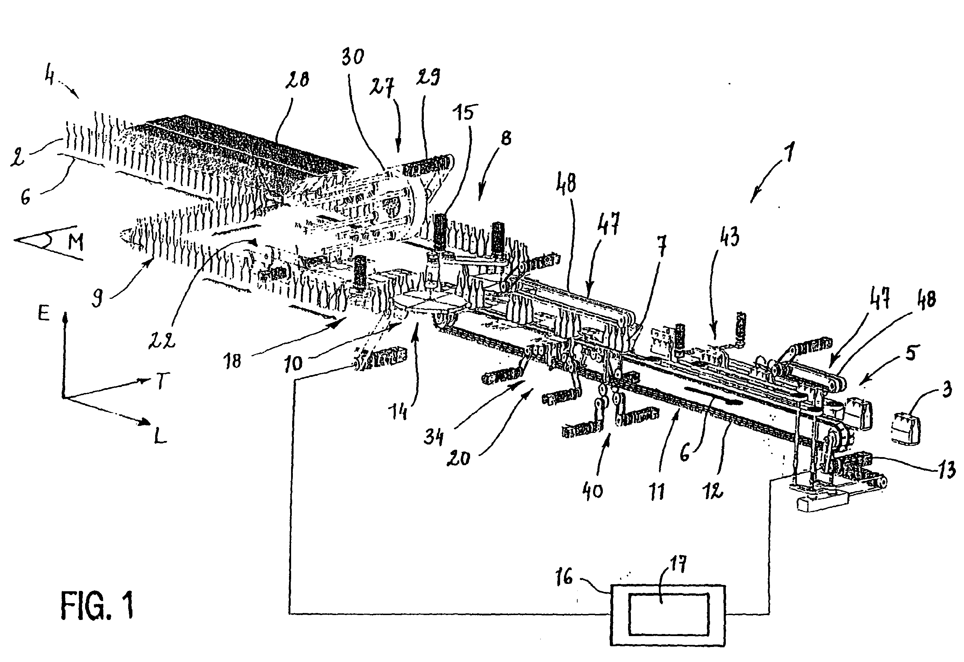

- la figure 1 est une vue en perspective d'une installation de conditionnement dont le réglage est automatisé, cette installation comprenant notamment:

    - une voie pour acheminer les articles un à un ;
    - des moyens pour cadencer et orienter les articles disposés à proximité d'une extrémité de cette voie ;
    - des moyens de transfert des articles depuis la voie d'acheminement vers un convoyeur, qui groupent les articles par lots en les disposant sur des flans en carton ou équivalent, provenant d'un transporteur ;
    - des moyens de dépilage des flans depuis un empilement vers ce transporteur ;
    - des moyens de mise en volume et de fermeture des flans autour des lots pour former des packs.

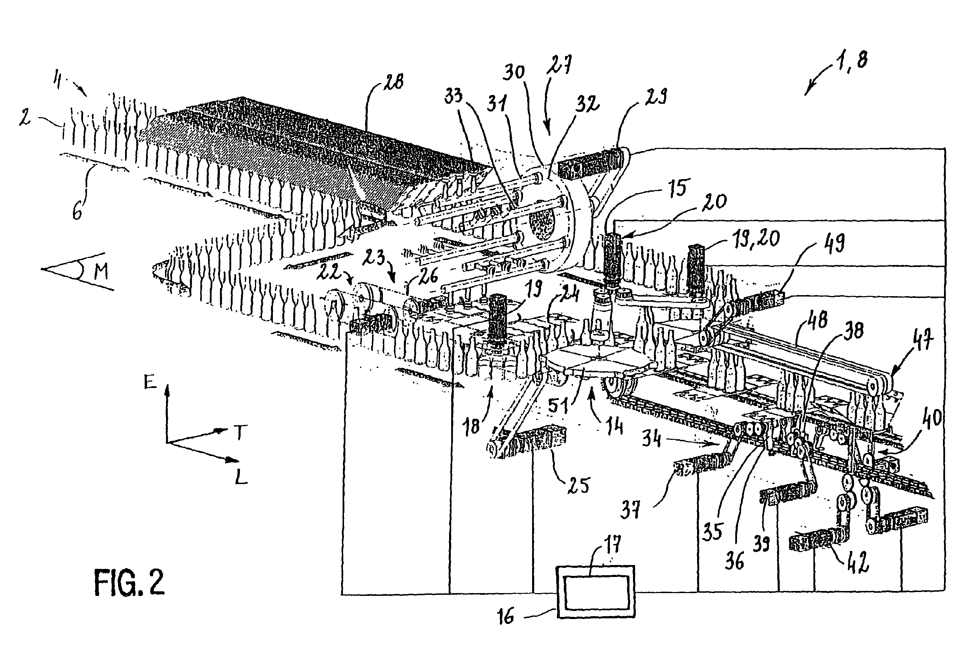

- La figure 2 est une vue d'un détail de la figure 1, illustrant une partie amont de l'installation ;

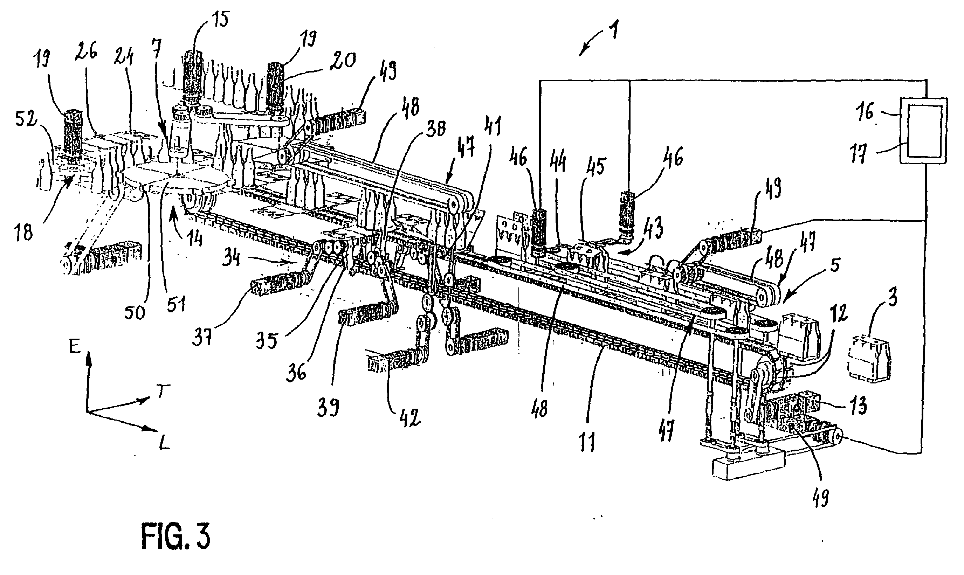

- La figure 3 est une vue d'un détail de la figure 1, illustrant une partie aval de l'installation ;

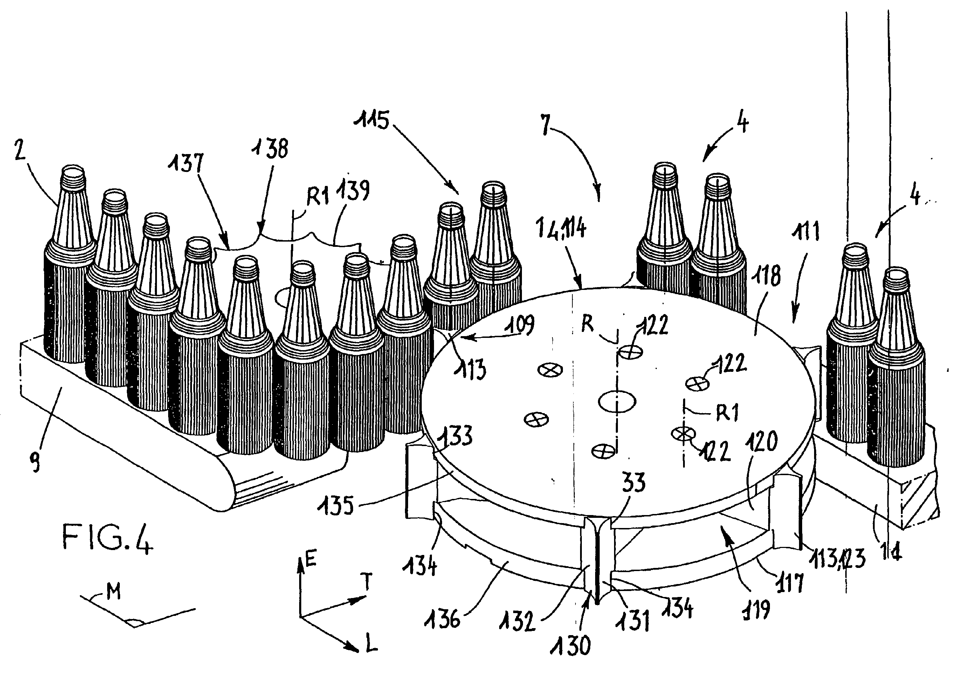

- la figure 4 est une vue en perspective d'un mode de réalisation des moyens de transfert des articles depuis la voie d'avancement vers le convoyeur, ainsi que des moyens pour ordonner et cadencer les articles ; les moyens de transfert comprennent une roue dentée dont une partie au moins est montée pivotante comprenant une pluralité d'organes de préhension , tandis que les moyens pour ordonner et cadencer les articles comprennent une roue étoilée également pivotante ;

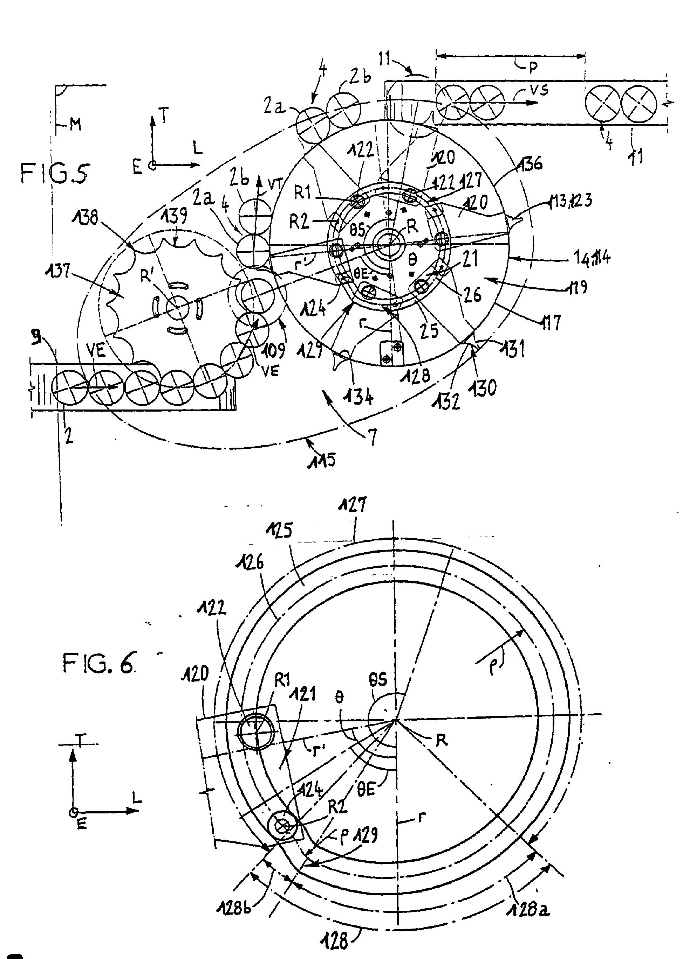

- la figure 5 représente une vue en coupe de dessus des moyens de transfert représentés sur la figure 4 ;

- la figure 6 est une vue d'un détail de la figure 5, qui montre la gorge pratiquée dans le socle de la roue dentée ; sur cette figure une branche est représentée partiellement, son extrémité intérieure, tournée vers l'axe de la roue, comporte un galet qui circule dans la gorge ; la gorge comprend une portion à courbure constante et une portion à courbure variable ; la branche est représentée dans une position où son galet, qui circule par exemple dans le sens des aiguilles d'une montre, vient de quitter la portion à courbure variable et est engagé dans la portion à courbure constante ; et

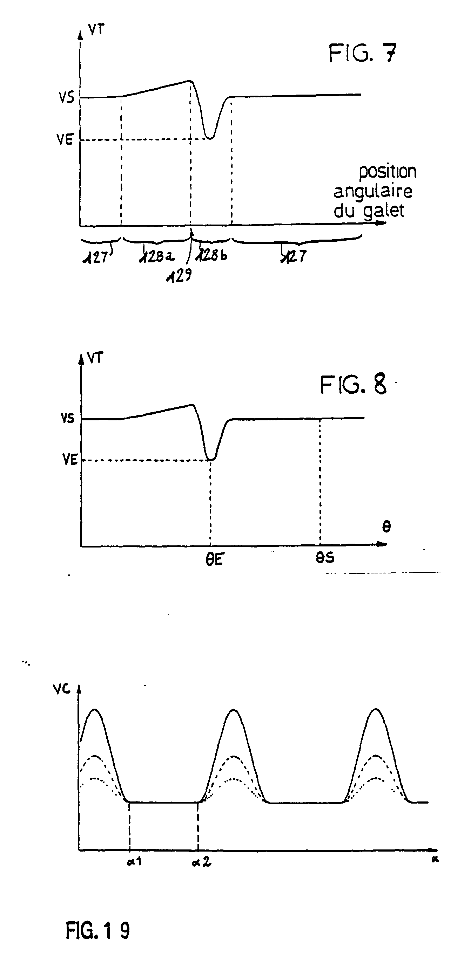

- les figures 7 et 8 sont des graphiques représentant la vitesse d'un organe de préhension porté par une branche telle que représentée sur la figure 6, en fonction respectivement de la position angulaire du galet de la branche, et de la position angulaire de l'organe de préhension ; sur la figure 7 sont représentées schématiquement sous forme d'accolades les portions de la gorge avec lesquelles coopère successivement le galet lors de la rotation de la roue dentée sur un tour.

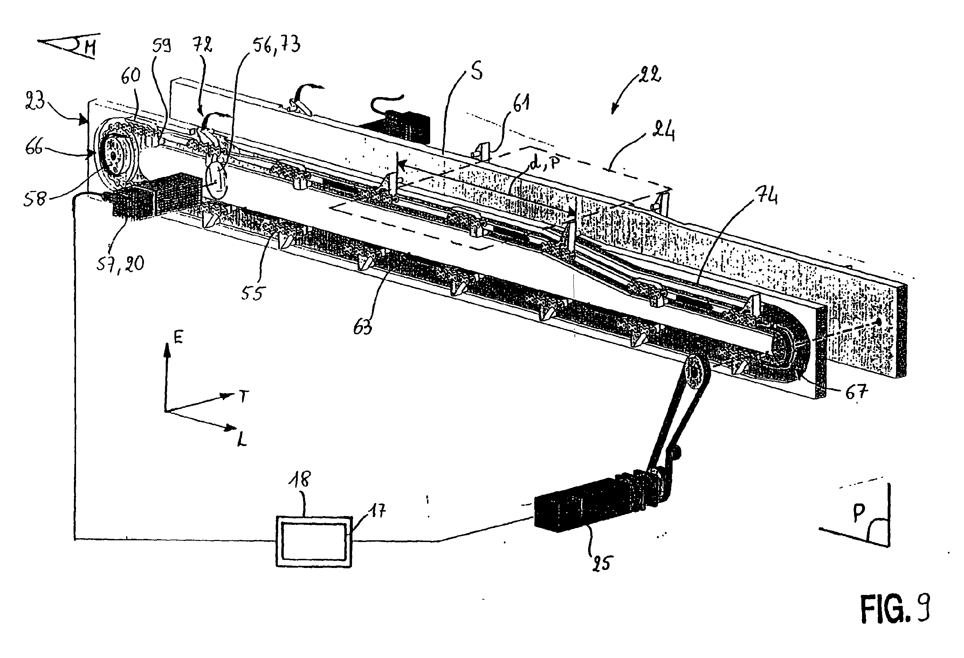

- la figure 9 est une vue en perspective d'un système de convoyage comprenant deux transporteurs sans fin parallèles pour l'acheminement d'objets plats tels que des flans en carton ou équivalent ; ces transporteurs comprennent chacun une pluralité de poussoirs articulés aptes à être engagés par un organe d'actionnement rotatif réglable ;

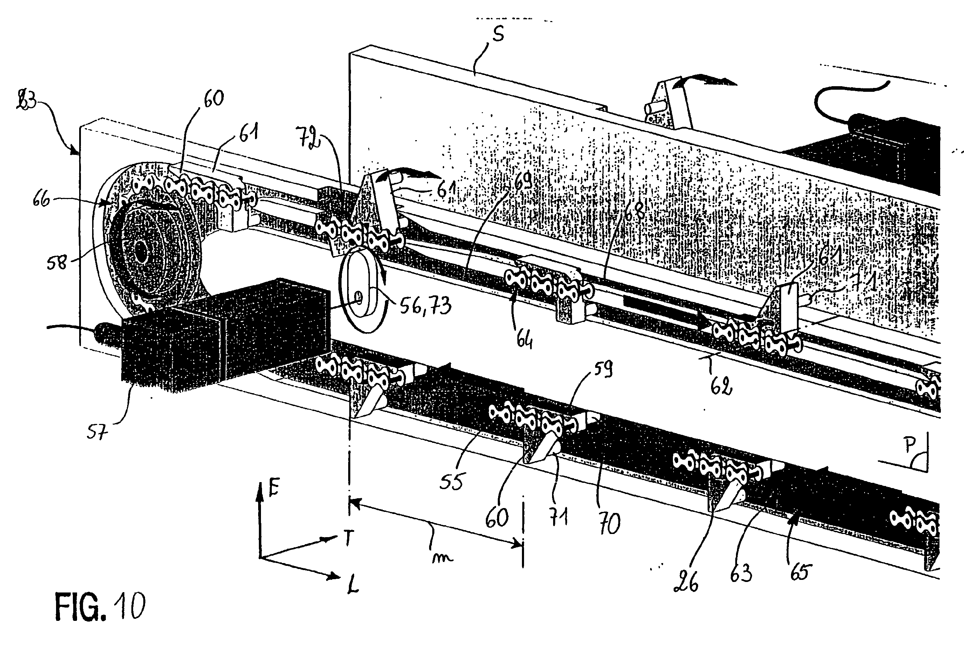

- la figure 10 est une vue d'un détail de la figure 9, qui illustre le pivotement d'un poussoir en prise avec l'organe d'actionnement ;

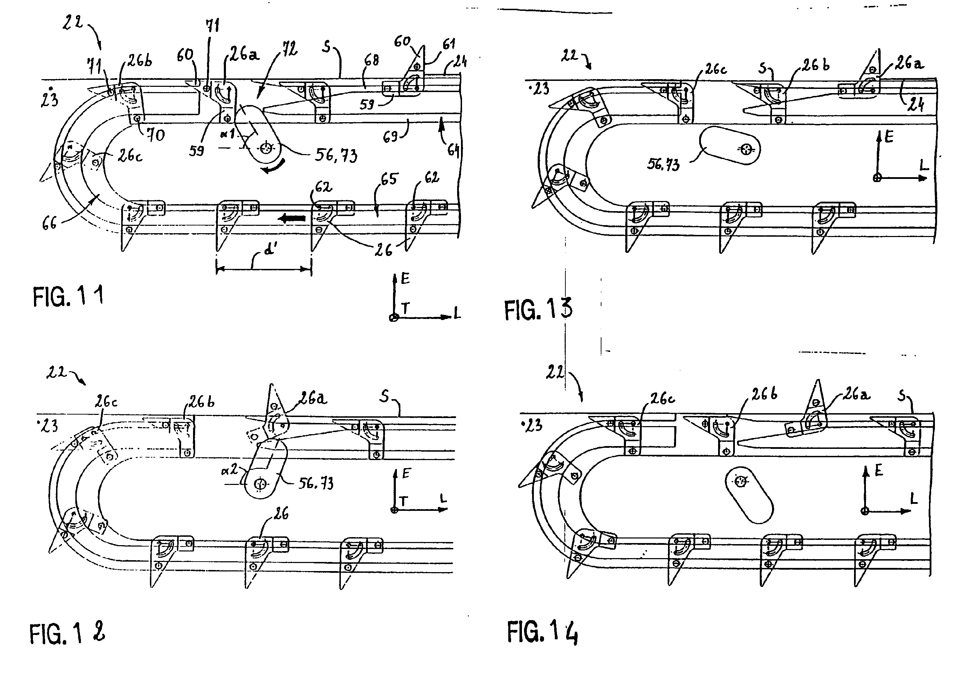

- les figures 11 à 14 sont des vues d'élévation longitudinale du système de convoyage des figures 9 et 10, qui illustrent quatre étapes successives du pivotement d'un poussoir depuis une position dite inactive vers une position active, selon un premier réglage de l'organe d'actionnement, de sorte que ce dernier actionne un poussoir sur deux ;

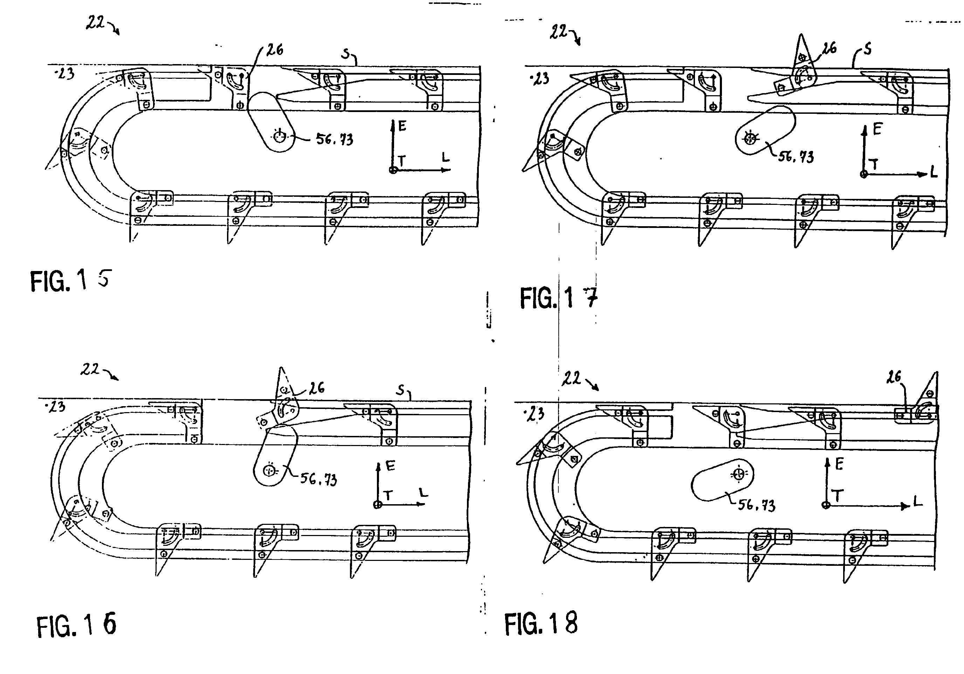

- les figures 15 à 18 sont des vues similaires aux vues des figures 11 à 14, qui illustrent quatre étapes successives du pivotement d'un poussoir depuis une position dite inactive vers une position active, selon un deuxième réglage de l'organe d'actionnement, de sorte que ce dernier actionne un poussoir sur trois ;

- la figure 19 est un diagramme illustrant l'évolution de la vitesse de rotation de l'organe d'actionnement du système de convoyage des figures 9 à 18, en fonction de sa position angulaire, selon un premier réglage où l'organe d'actionnement vient en prise avec un poussoir sur deux (traits pleins), selon un deuxième réglage où il vient en prise avec un poussoir sur trois (traits mixtes), et selon un troisième réglage où il vient en prise avec un poussoir sur quatre (traits discontinus).

Sur la figure 1 est représentée une installation 1 de conditionnement d'articles 2 tels que des bouteilles ou des canettes, à partir desquels sont formés des produits finis tels que des packs 3.

Les articles 2 sont introduits à un poste d'entrée 4 de l'installation 1, tandis que les packs 3 sont évacués depuis un poste de sortie 5.

Pour être conditionnés, les articles 2 subissent un certain nombre d'opérations qui, pour plus de commodité, sont supposées avoir lieu dans un même plan de travail M sensiblement horizontal, le long d'un chemin de convoyage 6 représenté par les flèches, qui s'étend entre le poste d'entrée 4 et le poste de sortie 5, sensiblement selon une direction longitudinale L, représentée sur les figures 1 à 18.

Sur les figures est également représentée une direction transversale T, sensiblement perpendiculaire à la direction longitudinale L en étant contenue dans le plan de travail M.

Une direction d'élévation E est aussi représentée. Cette direction est sensiblement verticale, perpendiculaire au plan M, de sorte que les directions longitudinale L, transversale T et d'élévation E forment un repère orthogonal par rapport auquel est effectuée la présente description.

Les termes « amont », « aval » sont définis par rapport à la direction longitudinale; le terme « latéral » est défini par rapport à la direction transversale, tandis que les termes « haut », « bas » sont définis par rapport à la direction d'élévation.

Dans cette installation 1, les articles 2 subissent deux opérations principales: d'une part le groupage par lots espacés 7, et d'autre part l'emballage ou l'empaquetage des lots 7 pour former les packs 3.

Chaque lot 7 comprend un nombre prédéterminé d'articles alignés 2. Ce nombre peut varier entre 2 et 6, ou plus.

Chaque pack 3 comprend quant à lui au moins un lot 7 d'articles 2. Pour que le pack comprenne au moins deux lots 7 parallèles d'articles 2, on peut prévoir plusieurs chemins de convoyage 6 convergents, pour former des séries séparées de lots 7 successifs qui sont ensuite regroupés.

L'installation représentée sur les figures 1 à 3 est destinée à former des packs 3 comprenant deux lots 7 identiques d'articles 2 alignés.

C'est pourquoi sont prévus deux chemins de convoyage 6 symétriques par rapport à un plan d'élévation longitudinale, pour la formation de deux séries distinctes de lots 7.

Cette représentation est bien évidemment donnée à titre d'exemple, et on peut prévoir une pluralité de chemins de convoyage 6 distincts convergents.

Pour chaque série de lots 7, l'installation 1 comprend un dispositif 8 pour la constitution des lots 7.

Ce dispositif 8 comprend une voie d'avancement 9 qui s'étend entre le poste d'entrée 4 et un poste intermédiaire 10 localisé entre le poste d'entrée 4 et le poste de sortie 5, par exemple à distance sensiblement égale de ces derniers.

Les articles 2 sont acheminés le long de la voie d'avancement 9, un à un, en étant juxtaposés les uns aux autres, au moyen d'un tapis roulant motorisé ou de tout autre moyen équivalent.

Le dispositif 8 comprend également un convoyeur 11 apte à recevoir les lots 7 d'articles 2 successifs pour les acheminer depuis une localisation amont à proximité du poste intermédiaire 10, vers une localisation aval à proximité du poste de sortie 5.

Lorsqu'ils sont disposés sur le convoyeur 11, les lots 7 présentent une face tournée vers l'amont et une face tournée vers l'aval. Les faces amont de deux lots 7 successifs sont espacées d'une distance prédéterminée P dite « pas ».

Selon un mode de réalisation illustré sur les figures 1 à 3, le convoyeur 11 comprend deux bandes porteuses 12 sans fin jumelles, motorisées, s'étendant longitudinalement.

Par ailleurs, le dispositif 8 comprend également:

- un moyen d'entraînement 13 du convoyeur 11;
- des moyens de transfert 14 des articles 2 depuis la voie d'avancement 9 vers le convoyeur 11, aptes à prendre et grouper les articles 2 pour former les lots espacés ; et
- un moyen d'entraînement 15 des moyens de transfert 14.

La structure de ce dispositif 8 et son mode de fonctionnement seront décrits en détail plus loin dans la description.

L'installation 1 est prévue pour que le pas P, le nombre d'articles 2 par lot 7 et la cadence de production soient réglable de manière automatique.

Ces réglages sont effectués en appliquant notamment au convoyeur 11 et aux moyens de transfert 14 des profils de vitesse particuliers par l'intermédiaire de leurs moyens d'entraînement 13, 15 respectifs.

A cet effet, l'installation 1 comprend en outre un dispositif 16 de commande et d'asservissement des moyens d'entraînement 13, 15.

Le dispositif 16 de commande est agencé pour appliquer à chaque moyen d'entraînement 13, 15 notamment, un profil de vitesse choisi parmi un ensemble pré-programmé de profils de vitesses.

Le dispositif 16 de commande comporte par exemple une mémoire informatique 17 dans laquelle sont stockés des ensembles de profils de vitesse destinés à être appliqués sélectivement à chacun des moyens d'entraînement 13, 15.

La vitesse de chaque moyen d'entraînement 13, 15 peut être fonction de sa position angulaire et/ou du temps.

Afin que les articles 2 présentent, au moment de leur préhension par les moyens de transfert 14, le positionnement et l'écartement voulus, le dispositif 8 peut également comprendre des moyens 18 aptes à ordonner et cadencer les articles 2 en provenance de la voie d'avancement 9.

Selon un mode de réalisation, les moyens 18 sont adjacents à la voie d'avancement 9 et aux moyens de transfert 14.

Le dispositif 8 comprend en outre un moyen d'entraînement 19 des moyens 18 pour ordonner et cadencer les articles 2, asservi au dispositif de commande 16, qui peut appliquer au moyen d'entraînement 19 un profil de vitesse prédéterminé, choisi, comme précédemment, parmi en ensemble pré-programmé de profils de vitesse.

Les vitesses des moyens d'entraînement pouvant être variables au cours du temps, on prévoit des moyens d'entraînement 13, 15, 19 adaptés à de telles variations.

A cet effet, l'un au moins des moyens d'entraînement 13, 15, 19, notamment le moyen d'entraînement 15 des moyens de transfert 14, comprend un moteur 20 dont la vitesse de rotation est réglable de façon continue.

Ce moteur 20 est par exemple un moteur électrique à courant continu sans balais, plus couramment appelé moteur « brushless», dont la vitesse de rotation peut être modulée à volonté.

Les moteurs brushless sont connus et font déjà l'objet de nombreuses applications dans l'industrie.

Leurs principaux avantages sont d'une part une vitesse de rotation variable en fonction de la tension appliquée à leurs bornes, et d'autre part une longévité accrue de par l'absence de balais et de commutateur, sources de frottements et d'usure.

Afin de former les packs 3, l'installation 1 comprend également des moyens d'emballage 21 des lots 7 d'articles 2.

Selon un mode de réalisation illustré sur les figures 1, 2, 9, 10, l'installation 1 comprend un système de convoyage 22, qui comporte :

- un transporteur 23 étendu sensiblement longitudinalement, qui achemine un par un des flans 24 en carton ou équivalent vers le poste intermédiaire 10 pour les disposer sur le convoyeur 11 en regard des lots 7 d'articles 2;
- un moyen d'entraînement 25 du dit transporteur 23, asservi au dispositif de commande 16.

Les flans 24 comprennent par exemple un panneau central sur lequel sont destinés à être disposés les articles 2, et autour duquel sont articulés des panneaux latéraux et des volets de maintien des articles 2 .

Les flans 24 sont disposés à plat sur le transporteur 23, en étant étendus transversalement dans le plan M (figure 9).

Selon un mode de réalisation illustré sur les figures 1, 2 et sur les figures 9 à 18, le transporteur 23 comprend des poussoirs 26, chacun étant apte à venir en prise avec un flan 24 pour l'acheminer vers le convoyeur 11.

Le dispositif 16 de commande comporte par exemple une mémoire informatique 17 dans laquelle sont stockés des ensembles de profils de vitesse destinés à être appliqués sélectivement au moyen d'entraînement 25 et à chacun des éventuels autres moyens d'entraînement.

Selon le fonctionnement prévu pour chacun de ces moyens d'entraînement, on introduit dans le dispositif de commande 16, par programmation dans la mémoire 17, des profils de vitesse constante ou variable en fonction du temps.

Le dispositif 16 de commande est ainsi agencé pour appliquer au moyen d'entraînement 25 notamment, un profil de vitesse choisi parmi un ensemble pré-programmé de profils de vitesses, introduits dans la mémoire 17.

Le moyen d'entraînement 25 est choisi pour que puisse lui être appliqué des profils de vitesse constant, le profil de vitesse étant modifié lors d'un changement de cadence par exemple.

A cet effet, il comprend par exemple un moteur dont la vitesse de rotation est variable et réglable de façon continue. Ce moteur est par exemple électrique à courant continu sans balais, appelé moteur brushless.

Un dispositif de dépilage 27 peut être prévu, pour transférer les flans 24 depuis une pile 28 vers le transporteur 23, ainsi qu'un moyen d'entraînement 29 du dispositif de dépilage 27, asservi au dispositif de commande 16.

Selon un mode de réalisation illustré sur les figures 1 et 2, le dispositif de dépilage 27 comprend un tambour 30 rotatif d'axe transversal auquel sont fixés des bras 31 transversaux pivotants sensiblement parallèles et régulièrement espacés.

Les bras 31 sont associés au tambour au voisinage de sa périphérie 32, et comprennent des ventouses 33 aptes à aspirer les flans 24 et à les transférer depuis la pile 28 vers le transporteur 23, qui à son tour les transporte vers le convoyeur 11.

Les packs 3 sont formés à partir des lots 7 d'articles 2 et des flans 24 au moyen notamment d'un dispositif 34 de pliage, adjacent au convoyeur 11, prévu pour plier les volets de maintien des flans.

A cet effet, le dispositif 34 de pliage comprend un premier bras 35 rotatif adjacent au convoyeur 11, tournant à vitesse non constante autour d'un axe transversal passant sensiblement par le centre de gravité du bras 35.

Le premier bras 35 est symétrique par rapport à son axe et comprend, à proximité de chacune de ses extrémités, une partie courbée 36 telle que le bras 35 a sensiblement la forme d'un S dans un plan d'élévation longitudinale.

Le bras 35 est entraîné en rotation à une vitesse telle que chaque demi-tour du bras 35 coïncide avec le passage d'un flan 24.

L'une des parties courbées 36 vient alors en prise avec un volet 24a du flan 24 tourné vers l'amont, pour le plier en direction des articles 2 du lot 7 au fur et à mesure de l'avancée de ce dernier sur le convoyeur 11.

Selon un mode de réalisation, la vitesse de rotation du bras 35 est non constante et varie en fonction de sa position angulaire autour de son axe.

Notamment, la vitesse du bras est sensiblement constante lorsque la partie recourbée 36 est en prise avec le flan 24, tandis qu'elle est croissante puis décroissante, ou inversement selon le réglage du pas P, entre deux passages successifs d'un flan 24.

Le premier bras 35 est entraîné en rotation par un premier moyen d'entraînement 37, asservi au dispositif 16 de commande.

Par ailleurs, le dispositif de pliage 34 peut également comprendre un second bras 38 rotatif adjacent au convoyeur 11, analogue au premier bras, et disposé en aval de celui-ci, symétriquement par rapport à un plan d'élévation transversale, de sorte que le second bras 38 a sensiblement la forme d'un Z dans un plan d'élévation longitudinale.

Le fonctionnement du second bras 38 est sensiblement identique à celui du premier, sa vitesse de rotation étant cependant sensiblement différente, de sorte qu'il assure le pliage d'un volet tourné vers l'aval.

Le second bras 38 est également entraîné en rotation, par un second moyen d'entraînement 39, également asservi au dispositif 16 de commande.

Selon un mode de réalisation, il est également prévu un dispositif 40 de mise en volume des flans 24 autour des lots 7 d'articles 2.

Ce dispositif 40, adjacent au convoyeur 11 en aval du dispositif de pliage 34 décrit ci-dessus, est destiné à plier les panneaux latéraux des flans 24.

Le dispositif 40 de mise en volume comprend un levier 41 en mouvement d'aller-retour dans un plan d'élévation longitudinale du bas vers le haut et réciproquement (figure 3).

Ce levier 41 en mouvement pousse les panneaux latéraux des flans 24 vers le haut au fur et à mesure de l'avancée du lot 7 d'articles 2 sur le convoyeur 11, pour les rabattre vers les articles 2 et assurer én partie la fermeture du pack 3.

Ce levier 41 est entraîné à vitesse prédéterminée dans son mouvement de va et vient par un moyen d'entraînement 42 asservi au dispositif de commande 16.

Un dispositif 43 de fermeture des flans 24 autour des lots 7 pour former les packs 3 est également prévu.

Ce dispositif 43 est par exemple disposé au-dessus du convoyeur 11, et comprend un levier 44 animé d'un mouvement transversal de va et vient, pour venir en prise avec un panneau de fermeture 45 du flan 24 et rabattre ce dernier contre les articles 2 du lot 7.

Ce levier 44 est mis en mouvement à une vitesse prédéterminée par un moyen d'entraînement 46 du dispositif de fermeture 43, asservi au dispositif de commande 16.

Les vitesses de fonctionnement des moyens d'entraînement 42, 46, sont prédéterminées, en étant pré-programmées dans la mémoire 17 du dispositif de commande 16.

En outre, l'installation 1 peut comprendre un dispositif de guidage 47 des lots 7 le long d'une partie au moins du convoyeur 11, ce dispositif comprenant par exemple au moins une bande sans fin 48 circulant le long du convoyeur 11.

La ou chaque bande sans fin 48 est entraînée en mouvement à une vitesse prédéterminée par un moyen d'entraînement 49 du dispositif de guidage 47, asservi au dispositif de commande 16.

Afin d'assurer un fonctionnement continu et synchronisé de l'installation 1, il est nécessaire de synchroniser ses différents moyens d'entraînement.

A chaque moyen d'entraînement asservi au dispositif de commande 16 correspond un ensemble prédéterminé de profils de vitesse introduits dans la mémoire 17.

Selon le fonctionnement prévu pour chacun de ces moyens d'entraînement, on introduit dans le dispositif de commande 16, par programmation dans la mémoire 17, des profils de vitesse constante ou variable en fonction du temps.

Des exemples de profils de vitesse sont donnés par la suite notamment pour le moyens d'entraînement 15 des moyens de transfert 14.

Les moyens d'entraînement 25, 29, 37, 42, 46, 49 sont choisis pour que puissent leur être appliqués des profils de vitesse variable.

A cet effet, au moins l'un d'entre eux, et par exemple chacun d'entre eux, comprend un moteur 20 tel que celui mentionné plus haut, par exemple un moteur brushless.

L'on décrit à présent plus en détail le dispositif 8 en référence aux figures 8 à 18.

Ce dispositif 8 comprend une voie d'alimentation, ou voie d'avancement 9 le long de laquelle les articles 2 sont acheminés un à un jusqu'à un poste d'alimentation 109, situé dans une zone de groupage 115, et par exemple confondu avec une extrémité de la voie d'alimentation 9.

Les articles 2 sont acheminés à une vitesse d'entrée VE sensiblement constante le long de la voie d'alimentation 9, en étant juxtaposés les uns aux autres, au moyen d'un tapis roulant motorisé ou de tout autre moyen équivalent.

Le dispositif 8 comprend également une voie d'évacuation ou convoyeur 11, apte à recevoir, à un poste d'évacuation 111 situé dans la zone de groupage 115, les articles 2 groupés par lots 4 pour les acheminer depuis l'amont vers l'aval à une vitesse dite de sortie VS sensiblement constante, supérieure à la vitesse d'entrée VE.

Le dispositif 8 comprend en outre des moyens de transfert 14 des articles 2 depuis le poste d'alimentation 109 vers le poste d'évacuation 111, qui prennent les articles 2 au poste d'alimentation 109 et les groupent en formant les lots 4 espacés.

Les moyens de transfert 14 sont agencés pour que le nombre d'articles 2 par lot 4 soit variable sans arrêter le défilement desdits articles.

A cet effet, selon un mode de réalisation, les moyens de transfert 14 comprennent un organe rotatif apte à prendre et grouper les articles 2 pour former des lots 4 espacés, ledit organe rotatif comprenant une succession d'organes de préhension 113 qui engagent les articles 2 au poste d'alimentation 109 et les désengagent au poste d'évacuation 111 après qu'ils ont été groupés par lots 4 et espacés.

L'organe rotatif permet de faire varier le nombre d'articles 2 par lot.

Entre le poste d'alimentation 109 et le poste d'évacuation 111, les articles 2 sont entraînés en continu le long d'un chemin fermé selon une trajectoire qui suit au moins un quart de la périphérie de l'organe rotatif, de sorte que les organes de préhension 113 puissent entrer en contact avec les articles et le grouper en lots 4 successifs.

La vitesse de l'organe rotatif est supérieure à la vitesse d'entrée VE des articles.

Les organes de préhension 113 sont entraînés et circulent le long d'une trajectoire en boucle fermée à une vitesse VT dite de transfert.

Cette vitesse de transfert VT est supérieure ou égale à la vitesse d'entrée VE, de sorte que les articles sont accélérés entre le poste d'alimentation 109 et le poste d'évacuation 111.

Les vitesses d'entrée VE et de sortie VS étant prédéfinies, les moyens de transfert 14 sont agencés pour que la vitesse de transfert VT des organes de préhension 113 varie le long de leur trajectoire, de sorte que:

- lors de l'engagement des articles 2 au poste d'alimentation 109, la vitesse de transfert VT soit sensiblement égale à la vitesse d'entrée VE ;

- lors du transfert des articles 2, c'est-à-dire entre le poste d'alimentation 109 et le poste d'évacuation 111, la vitesse de transfert VT soit supérieure à la vitesse d'entrée VE ; et

- lors du désengagement des articles 2 au poste d'évacuation 111, la vitesse de transfert VT soit sensiblement égale à la vitesse de sortie VS.

Ainsi, l'engagement et le dégagement des articles 2 est effectué sans choc et sans à-coups.

Selon un mode de réalisation, illustré sur les figures 4 et 5, les moyens de transfert 14 comprennent une roue dentée 114 montée au moins en partie pivotante autour d'un axe R de rotation sensiblement vertical, perpendiculaire au plan M, et entraînée en rotation par un moyen d'entraînement 15, tel qu'un moteur 20.

Cette roue dentée 114 est disposée dans une zone de transfert 105, à proximité de la voie d'alimentation 9 et de la voie d'évacuation 11, par exemple adjacente à elles.

Selon un mode de réalisation, les organes de préhension 113 se présentent sous la forme de dents 113 régulièrement espacées, par exemple au nombre de six, saillant radialement de la roue dentée 114.

Lors de la rotation de la roue 114 autour de son axe R, chaque dent 113 décrit un cercle, en passant par une première position angulaire θE dans laquelle elle engage, au poste d'alimentation 109, au moins un article 2 en provenance de la voie d'alimentation 9, et une deuxième position angulaire θS dans laquelle elle désengage l'article 2 au poste d'évacuation sur la voie d'évacuation 11.

Pour chaque dent 113, on note θ sa position angulaire par rapport à l'axe R de rotation de la roue dentée 114, cette position angulaire θ étant définie arbitrairement comme l'écart angulaire séparant un rayon r transversal fixe de la roue dentée 114, et un rayon mobile r' passant par la dent 113.

L'écart angulaire entre la première et la deuxième positions angulaires θE, θS est par exemple compris entre 90 degrés et 180 degrés environ.

Selon un mode de réalisation, cet écart angulaire est d'environ 120 degrés (figures 5 et 6).

La vitesse de transfert VT est la vitesse tangentielle des dents 113 lors de la rotation de la roue 114.

Les variations de la vitesse de transfert VT de la dent 113 en fonction de sa position angulaire θ peuvent être définies comme suit.

Lorsque θ est sensiblement égal à θE, la vitesse de transfert VT est sensiblement égale à la vitesse d'entrée VE des articles.

De la sorte, la dent 113 engage au moins deux articles 2 de manière continue, sans les heurter (figures 4 et 5), en formant un lot 4 d'articles groupés.

La vitesse de transfert VT croît alors de manière continue avec la position angulaire θ, pour atteindre une valeur sensiblement égale à la vitesse de sortie VS.

Ainsi, un espace est créé entre le lot 4 et les articles 2 encore sur la voie d'alimentation 9.

Le lot 4 atteint alors le poste d'évacuation 111 où il est disposé sur la voie d'évacuation 11 qui le prend en charge à vitesse constante VS, tandis que la dent 113 s'en désengage.

Selon un mode de réalisation, décrit à présent en référence aux figures 4 et 5, la roue dentée 114 comprend un socle fixe 117 circulaire ainsi qu'un disque rotatif 118 appelé platine dans la suite de la description.

Le socle 117 et la platine 118 sont sensiblement coaxiaux d'axe R et superposés, la platine 118 étant disposée au dessus du socle 117; ils définissent entre eux une enceinte 119 sensiblement cylindrique.

Une localisation à proximité de l'axe R est dite intérieure, par opposition à une localisation à distance de l'axe R, dite extérieure.

Des branches radiales 120 disposées en étoile sont insérées dans l'enceinte 119 entre le socle 117 et la platine 118.

Chaque branche 120 possède d'une part une extrémité 121 tournée vers l'intérieur, fixée à la platine 118 au moyen d'un pivot 122 d'axe R1 parallèle à l'axe R, l'ensemble des pivots 122 étant inscrit dans un cercle d'axe R.

Chaque branche 120 possède d'autre part une extrémité libre 123 tournée vers l'extérieur, saillant radialement de l'enceinte 119 pour former la dent 113 décrite ci-dessus.

La rotation de la platine 118 autour de son axe R entraîne la rotation des branches 120 dans un mouvement circulaire d'axe R, chaque branche 120 balayant dans son mouvement l'espace défini par l'enceinte 119.

Le pivotement de chaque branche 120, autour de son axe R1, par rapport à la platine 118, est commandé par un galet 124 ou un ergot d'axe R2 parallèle à l'axe R, fixé à l'extrémité intérieure de la branche 120, à distance du pivot 122.

Chaque galet 124 coopère avec une gorge 125 formant came, ménagée dans le socle 117, dans laquelle le galet 124 circule lors de la rotation de la platine 118, cette gorge 125 étant étendue en boucle fermée autour de l'axe R de rotation de la roue dentée 114.

Cette gorge 125 forme dans le socle un chemin de came 126 continu, suivi par le galet 124 qui forme ainsi suiveur de came.

Cette gorge 125 est agencée pour que :

- lors du passage de la dent 113 par le poste d'alimentation 109, la branche 120 qui la porte pivote dans le sens contraire de la rotation de la roue 114 pour que la vitesse de la dent 113 diminue jusqu'à être sensiblement égale à la vitesse d'entrée VE lors de l'engagement des articles ; et

- selon un premier mode de réalisation, entre le poste d'alimentation 109 et le poste d'évacuation 111, la dite branche 20 pivote dans le sens de la rotation de la roue 114 pour que la vitesse de la dent 113 augmente jusqu'à être sensiblement égale à la vitesse de sortie VS, de sorte que les articles sont groupés en lots, accélérés, espacés ;

- selon un deuxième mode de réalisation, entre le poste d'alimentation 109 et le poste d'évacuation 111, l'orientation de ladite branche 120 étant constante par rapport à la roue 114, de sorte que la vitesse de la dent 113 augmente jusqu'à être sensiblement égale à la vitesse de la roue dentée 114, de sorte que les articles sont groupés en lots, accélérés, espacés.

Le second mode de réalisation est maintenant décrit en détail.

Le chemin de came 126 a une forme pseudo circulaire d'axe R, et comprend deux portions connexes :

- un première portion 127 de courbure sensiblement constante, c'est-à-dire sensiblement circulaire d'axe R, s'étendant sur environ un demi tour à trois quarts de tour autour de l'axe R, tournée vers le poste d'évacuation 111;

- une deuxième portion 128 présentant une courbure variable, s'étendant sur environ un quart de tour à un demi tour autour de l'axe R, et tournée vers le poste d'alimentation 109.

Le chemin de came 126 présentant un rayon de courbure ρ (figure 6), on rappelle que la courbure du chemin de came 26 est définie par l'inverse 1/p du rayon de courbure ρ.

De la sorte :

- lors du passage du galet 124 dans la portion 127 à courbure constante, l'orientation de la branche 120 est sensiblement constante, la vitesse VT de la dent 113 étant de ce fait sensiblement constante ;

- lors du passage du galet 124 dans la portion 128 à courbure variable, la branche 120 pivote autour de son axe R1, la vitesse VT de la dent 113 variant en conséquence.

Selon un mode de réalisation illustré sur la figure 6, la portion 128 comprend :

- une première partie 128a adjacente à la portion 127 à courbure constante, et s'étendant angulairement sur environ un quart de tour ; et

- une deuxième partie 128b située à proximité du poste d'entrée 109, entre la première partie 128a et la portion 127 à courbure constante, et qui s'étend angulairement sur quelques degrés, par exemple une dizaine environ.

La première partie 128a présente une courbure croissant sensiblement linéairement depuis la portion 127 à courbure constante jusqu'à la seconde partie 128b, de sorte à former un arc de spirale d'axe R.

La deuxième partie présente quant à elle une courbure qui décroît depuis la première partie 128a jusqu'à la portion 127 à courbure constante.

En outre, la portion 128 à courbure variable comprend une chicane 129 située à proximité du poste d'alimentation 109, à la jonction entre la première partie 128a et la deuxième partie 128b.

Lorsque le galet 124 quitte la portion 127 et s'engage dans la première partie 128a, celle-ci le force à s'éloigner de l'axe R, de sorte que la branche 120 pivote dans le sens de rotation de la platine 118, la vitesse de transfert VT de la dent 113 étant alors croissante (figures 5 et 6).

La dent 113 prend donc de l'avance par rapport à la platine 118.

Lorsque le galet 124 passe la chicane 129 puis s'engage dans la deuxième partie 128b, celle-ci le force à se rapprocher de l'axe R, de sorte que la branche 120 pivote dans le sens inverse de la rotation de la platine 118, la vitesse de transfert VT de la dent 113 étant alors décroissante.

La vitesse VT de la dent décroît jusqu'à être sensiblement égale à la vitesse d'entrée VE lors du passage de la dent 113 par le poste d'alimentation 9, pour assurer la préhension sans à-coup des articles 2, le galet étant alors sensiblement au milieu de la deuxième partie 128b (figures 5 et 6).

La dent 113 perd donc son avance, et prend du retard par rapport à la platine 118.

En retrouvant la portion circulaire 127, le galet 124 force la branche 120 à garder une orientation constante par rapport à la roue dentée, de sorte que la vitesse VT de la dent 113 augmente sensiblement jusqu'à la vitesse de la roue dentée 114, sensiblement égale à la vitesse de sortie VS, les articles 2 étant groupés en lots 4, accélérés et espacés.

Suivant le premier mode de réalisation, en retrouvant la portion circulaire 127, le galet 124 force la branche 120 à pivoter autour de son axe R1 dans le sens de la rotation de la platine 118, de sorte à accélérer progressivement la dent 113 pour que sa vitesse VT augmente sensiblement jusqu'à la vitesse de sortie VS, les articles 2 étant groupés en lots 4, accélérés et espacés.

Dans les deux modes de réalisation, la dent 113 récupère donc son retard par rapport à la platine 118.

En formant suiveur de came, le galet 124 permet donc de réguler la vitesse de transfert VT de la dent 113 lors de la rotation de la platine 118.

Le réglage de la roue dentée 114 pour permettre notamment le changement du nombre d'articles 2 par lot 4 est effectué en décalant angulairement le socle 117 de façon à décaler angulairement le chemin de came 126 :

- dans le sens de la rotation de la platine 118 pour diminuer le nombre d'articles 2 par lot 4 ; ou

- dans le sens inverse de la rotation de la platine 118 pour augmenter le nombre d'articles 2 par lot 4; et

en faisant varier le rapport entre les vitesses d'une roue étoilée 137 (définie ci-après) et de la roue 114.

Ainsi, par exemple, pour grouper n articles successifs, les vitesses relatives sont telles qu'une dent 113 engage 1 article 2 tous les n articles 2 avancés par la roue étoilée 137.

Il est ainsi possible de changer facilement et rapidement le nombre d'articles par lot.

Par ailleurs, afin de faciliter la préhension des articles 2, les dents 113 sont étendues selon une direction d'élévation, et présentent une surface 130 apte à épouser la forme des articles 2.

Selon un mode de réalisation, les dents 113 présentent deux surfaces extérieures opposées 131, 132 incurvées pour épouser la forme d'un article 2 cylindrique, ainsi que deux surfaces de guidage supérieure 133 et inférieure 134 saillant verticalement de part et d'autre de chaque branche 120.

Les surfaces de guidage 133, 134 sont étendues tangentiellement par rapport à la roue 114, et sont en appui respectivement sur une circonférence 135 de la platine 118 et sur une circonférence 136 du socle 117, sur lesquelles elles glissent lors de la rotation de la platine 118 par rapport au socle 117.

Afin d'ordonner et cadencer les articles 2 en provenance de la voie d'alimentation 9 pour qu'ils présentent le positionnement et l'écartement voulus lors de l'engagement par les dents 113, le dispositif 8 peut en outre comprendre des moyens 18 tels qu'une roue étoilée 137.

La roue étoilée 137 est montée pivotante autour d'un axe de rotation R' sensiblement parallèle à l'axe R de rotation de la roue dentée 114.

Selon un mode de réalisation, illustré sur les figures 4 et 5, la roue étoilée 137 comprend à sa périphérie une denture 138 qui engrène les articles 2 en provenance de la voie d'alimentation 9, et les désengrène au poste d'alimentation 109 pour permettre leur préhension par les dents 113 de la roue dentée 114.

A cet effet, la denture 138 comporte des logements 139 aptes à recevoir individuellement les articles 2, la forme de chaque logement 139 étant sensiblement complémentaire d'un article 2.

Afin d'assurer un mouvement continu des articles 2, la vitesse tangentielle de la roue étoilée 137, ou des logements 139, est sensiblement égale à la vitesse d'entrée VE.

La rotation de la roue étoilée 137 peut être assurée par un moyen d'entraînement 19 tel qu'un moteur 20.

Selon un mode de réalisation, l'un des moteurs 20 des moyens d'entraînement 15, 19, ou les deux, sont reliés au dispositif de commande et d'asservissement 16 qui est agencé pour leur appliquer un profil de vitesse prédéterminé.

Selon un mode de réalisation, le moteur 20 est un moteur dont la vitesse de rotation est réglable de façon continue, par exemple un moteur électrique, du type à courant continu sans balais.

L'on décrit à présent la parcours d'un ensemble de deux articles 2 consécutifs, l'un 2a étant dit amont, l'autre 2b aval, destinés à un même lot 4, depuis le poste, selon un réglage où l'installation 1 produit des packs de quatre articles (c'est-à-dire deux lots de deux articles).

Les deux articles 2a, 2b sont acheminés le long de la voie d'alimentation 9 à une vitesse constante VE jusqu'à la zone de transfert 105 où ils sont engagés par la roue étoilée 137 qui leur fait décrire une trajectoire en forme d'arc de cercle, toujours à vitesse constante VE, jusqu'au poste d'alimentation 109.

Ils sont alors simultanément désengagés par la roue étoilée 137 et engagés par la roue dentée 114, une dent 113 venant en prise avec l'article 2a amont à une vitesse égale à la vitesse d'entrée VE.

Les articles 2a, 2b subissent alors une accélération progressive sous l'effet de l'augmentation de la vitesse VT de la dent 113.

Cette accélération a pour effet de les grouper en un lot 4, tout en les espaçant des articles 2 suivants, non encore engagés par la roue dentée 114.

Les articles 2a, 2b décrivent alors une trajectoire sensiblement en forme d'arc de cercle suivant la périphérie de la roue 114, par exemple un quart de cercle, au bout de laquelle ils sont disposés sur la voie d'évacuation, à une vitesse égale à la vitesse de sortie VS.

Lors du changement de « pas machine » P (qui correspond à la distance séparant deux lots d'articles consécutifs), on procède au changement de roue dentée 114, que l'on remplace :

- par une roue 114 comprenant un nombre inférieur de branches 120 pour une augmentation du pas P ; ou
- par une roue 114 comprenant un nombre supérieur de branches 120 pour une diminution du pas P.

Dans les installations classiques, où les organes de préhension circulent à une vitesse constante égale à la vitesse de sortie, il est difficile d'augmenter la cadence sans risquer d'abîmer les articles, du fait des chocs qu'ils subissent lors des brutales accélérations provoquées par les organes de préhension.

L'installation 1, et plus particulièrement le dispositif 8, permettent d'une part le réglage de la cadence C de production, et d'autre part le réglage du nombre d'articles 2 par lot 7 et le pas P.

On rappelle que la cadence de production C de l'installation 1 est définie comme suit:

$$C = \frac{VS}{P} \qquad\qquad (2)$$

Ainsi, pour agir sur la cadence C à pas P constant, on peut régler la vitesse de sortie VS.

Le réglage de la vitesse de sortie VS peut être effectué en régulant notamment la vitesse de fonctionnement des moyens d'entraînement 13 du convoyeur 11.

Le réglage du pas P est lié au réglage du nombre d'articles par lot 7. Plus précisément, le pas P est une fonction croissante du nombre N d'articles par lot 7.

L'on décrit à présent le système de convoyage 22, selon un mode particulier de réalisation en référence aux figures 9 à 18.

Ce système de convoyage 22 permet d'acheminer les flans 24 à plat, le long d'une surface de transport S s'étendant dans le plan M, vers le convoyeur 11 tout en les disposant en regard des lots 7 d'articles, par exemple sous les lots 7.

Il est réglable, de sorte à pouvoir transporter des flans 24 de tailles différentes, en fonction du nombre d'articles 2 par lot 7 et du pas P.

A cet effet, le transporteur 23 comprend une pluralité de poussoirs 26 régulièrement espacés, fixés à un support mobile 55 qui définit une trajectoire en boucle fermée, localement contiguë à la surface S de transport.

Les poussoirs circulent en continu, à sens unique et de manière périodique le long de cette trajectoire, qui s'étend sensiblement dans un plan P d'élévation longitudinale, dit de convoyage, .

Le support 55 est mis en mouvement par le moyen d'entraînement 25, asservi au dispositif de commande 16, et dont la vitesse peut varier de façon continue.

A cet effet, le moyen d'entraînement 25 peut comprendre un moteur 20 à vitesse de rotation réglable et/ou variable, par exemple un moteur brushless.

Chaque poussoir 26 est monté mobile entre une position dite inactive où le poussoir 26 est localisé à distance de la surface de transport S et ne saille pas de celle-ci, et une position dite active où il saille au moins partiellement de la surface de transport S.

Dans'sa position active, le poussoir 26 vient en prise avec un flan 24 et pousse celui-ci le long de la surface de transport S.

Chaque poussoir 26 peut être actionné par un organe mobile rotatif appelé sélecteur 56, venant en prise avec le poussoir 26 pour le faire passer de sa position inactive à sa position active.

Ce sélecteur 56 est mis en mouvement par un moyen d'entraînement 57 dont la vitesse est variable, et qui à cet effet comprend un moteur brushless, ou tout autre type de moteur dont la vitesse de rotation est réglable et/ou variable de façon continue.

Le moyen d'entraînement 57 est asservi au dispositif de commande 16, dont la mémoire 17 contient un ensemble pré-programmé de profils de vitesse non constante, applicables au moyen d'entraînement 57.

Le dispositif de commande 16 est agencé pour appliquer au moyen d'entraînement 25 de l'organe d'actionnement 56 un profil de vitesse tel que le fonctionnement de l'organe d'actionnement 56 soit périodique, la période de l'organe d'actionnement 56 étant définie comme l'intervalle de temps séparant deux passages successifs de l'organe d'actionnement 56 par une même position.

Notamment, la période du transporteur 23 étant définie comme l'intervalle de temps séparant le passage de deux poussoirs 26 par un même point de la trajectoire, le dispositif de commande 16 est agencé pour que la période de l'organe d'actionnement 56 soit un multiple de la période du transporteur 23.

Selon un mode de réalisation illustré sur les figures 9 et 10, le support 55 est une chaîne sans fin engrenant deux pignons 58 dont l'un au moins est associé au moteur 20.

Dans des variantes non représentées, le support 55 est une courroie crantée, ou un câble tracteur, ou tout autre moyen équivalent.

Tandis que chaque poussoir 26 est une pièce rigide en forme de V qui comprend une première branche 59 apte à venir en prise avec le sélecteur, ainsi qu'une deuxième branche 60 sensiblement perpendiculaire à la première.

Lorsque le poussoir est en position inactive, cette deuxième branche 60 saille au moins en partie de la surface de transport S pour venir en prise avec un flan 24.

A cet effet, la deuxième branche 60 comprend une surface 61 qui, lorsque le poussoir 26 est dans sa position active, s'étend dans un plan d'élévation transversale.

Les poussoirs 26 sont régulièrement répartis le long de la chaîne 55, sur laquelle chacun est monté pivotant autour d'un axe 62 transversal, formant moyen de fixation du poussoir 26 à la chaîne 55.

Les poussoirs circulent le long de leur trajectoire en étant guidés dans un rail 63 qui s'étend sensiblement dans un plan d'élévation longitudinale, sous la surface de transport S, parallèlement à cette trajectoire.

Le rail présente une zone supérieure 64 sensiblement rectiligne, longitudinale, contiguë à la surface S de transport, une zone inférieure 65, également sensiblement rectiligne, longitudinale, localisée à distance de la surface S de transport, reliées par une première et une deuxième zones d'extrémité 66, 67, en forme de demi-cercles.

Le long de la zone supérieure 64, le rail 63 se sépare en deux voies : une voie supérieure 68, contiguë à la surface S de transport, et une voie inférieure 69 localisée sous la première voie 68.

Le poussoir 26, quant à lui, comprend un premier ergot 70, saillant latéralement de la première branche 59, et un deuxième ergot 71, saillant latéralement de la deuxième branche 60.

Les ergots 70, 71 permettent à la fois le guidage et le blocage du poussoir 26 dans le rail 63.

A proximité de la première zone d'extrémité 66, le transporteur 23 présente une zone d'aiguillage 72 où les voies 68, 69 sont interrompues, pour permettre aux poussoirs 26 de pivoter librement autour de leur axe en passant de leur position inactive à leur position active.

Le sélecteur 56 est disposé à proximité de cette zone d'aiguillage 72.

Afin d'assurer le pivotement des poussoirs, le sélecteur 56 comprend une came 73 étendue sensiblement dans le plan P, et entraînée en rotation dans ce plan P autour d'un axe transversal.

L'on note $\alpha$ la position angulaire de la came 73 dans le plan P.

La came 73 est adjacente à la zone supérieure 64 du rail, pour venir momentanément en prise avec la deuxième branche 60 du poussoir 26 de manière à faire pivoter ce dernier.

Lors de sa rotation, la came 73 passe par une première position angulaire $\alpha 1$ où elle engage au moins le poussoir 26 pour le faire pivoter autour de son axe 62, et une deuxième position angulaire $\alpha 2$ où elle dégage le poussoir 26.

Le système de convoyage 22 est prévu pour que la came 73 agisse sur un sous-ensemble prédéterminé de l'ensemble de poussoirs 26 du transporteur 23.

A cet effet, le fonctionnement de la came 73 est périodique, sa période étant définie comme l'intervalle de temps séparant deux passages successifs de la came 73 par une même position angulaire.

Si l'on définit la période du transporteur 23 comme l'intervalle de temps séparant le passage de deux poussoirs par un même point de la trajectoire définie par la chaîne 55, la période de la came 73 est un multiple de la période du transporteur 23.

La période de la came 73 est réglable en appliquant à son moyen d'entraînement 57 un profil de vitesse choisi parmi un ensemble pré-programmé dans la mémoire 17 du dispositif de commande 16.

Ainsi, la came 73 est prévue pour actionner un poussoir 26 sur deux, un sur trois, un sur quatre, ou plus. Sa vitesse de rotation VC est donc régulée en conséquence.

Il est donc possible de faire varier le nombre de poussoirs simultanément en position active.

La vitesse VC à laquelle la came 73 est entraînée par son moyen d'entraînement 57 est continue, périodique, et variable en fonction de la position angulaire $\alpha$ de la came 73.

Notamment, la vitesse VC présente notamment les caractéristiques suivantes:

- elle est de signe constant, de sorte que la came 73 tourne à sens unique dans le même sens que la chaîne 55 ;
- elle est sensiblement constante depuis la première position angulaire $\alpha 1$ jusqu'à la deuxième position angulaire $\alpha 2$ de la came 73 ;
- elle est non constante, par exemple croissante puis décroissante, ou inversement en fonction du réglage, depuis la deuxième position angulaire $\alpha 2$ jusqu'à la première position angulaire $\alpha 1$ de la came 73.

Le profil de vitesse de la came 73 est, par exemple, choisi parmi un ensemble de profils de vitesse pré-programmé dans la mémoire 17 du dispositif de commande 16.

De la sorte, en fonction de sa vitesse, la came 73 peut engager de manière sélective un certain nombre de poussoirs 26 successifs appartenant à un sous-ensemble prédéterminé de l'ensemble des poussoirs 26.

Trois profils de vitesse VC de la came 73, en fonction de sa position angulaire, sont représentés sur la figure 19.

Le profil représenté en traits pleins correspond à un réglage de la came 73 selon lequel cette dernière actionne un poussoir 26 sur deux.

Tandis que les profils représentés en traits mixte et discontinu correspondent respectivement à deux réglages selon lesquels la came 73 actionne un poussoir sur trois, et un poussoir sur quatre.

La distance d séparant les surfaces 61 de deux poussoirs successifs en position active est sensiblement égale au pas P de l'installation.

En effet, cette distance correspond à l'écart entre deux flans 24 successifs, destinés à être disposés en regard des lots 7 d'articles 2, par exemple sous ceux-ci, préalablement à la constitution des packs 3.

La distance d est donc un multiple de la distance m séparant deux poussoirs 26 successifs sur la chaîne 55.

Cette distance m, appelée module, est fixée lors de la fabrication de l'installation, et notamment du système de convoyage 22.

On décrit à présent un mode de fonctionnement du dispositif de convoyage 22, selon un premier réglage où la came 73 engage un poussoir 26 sur deux, en référence aux figures 10 à 14.

On suit pour cela la course d'un premier, d'un deuxième et d'un troisième poussoirs 26a, 26b, 26c successifs le long de leur trajectoire, en partant d'une localisation où les poussoirs 26a, 26b, 26c sont tous trois dans la zone inférieure 65 du rail 63.

Les trois poussoirs 26a, 26b, 26c sont acheminés le long de la zone inférieure 65, puis le long de la première zone d'extrémité 66, en étant maintenus fixes en rotation dans le rail 63, les ergots 70, 71 étant en butée contre les bords du rail.

# EP 1 116 676 B1

Au sortir de la première zone d'extrémité 66, le premier ergot 70 des poussoirs 26a, 26b, 26c est guidé par la voie inférieure, tandis que le deuxième ergot 71 est guidé par la voie supérieure 68.

Les poussoirs 26a, 26b, 26c sont alors tous trois dans leur position inactive.

Lorsque le premier poussoir 26a débouche dans la zone d'aiguillage 72, sa deuxième branche 60 bute contre la came 73, cette dernière étant dans sa première position angulaire α1. La came 73 force alors le poussoir 26a à pivoter autour de son axe (figure 11).

Sous l'action de la came 73, qui accompagne à vitesse constante le premier poussoir 26a, le premier ergot 70 est aiguillé vers la voie supérieure 68, la deuxième branche 60 saillant de la surface S de transport vers le haut, pour venir en prise avec un flan 24 (figure 12). Le premier poussoir est alors dans sa position active.

Lorsque la came 73, dans la deuxième position angulaire α2, désengage le premier poussoir 26a, ce dernier est maintenu fixe en rotation, son deuxième ergot 71 étant guidé par la voie supérieure 68 du rail le long de la surface S de transport.

La came 73 accélère alors, en pivotant autour de son axe. Pendant ce temps, le deuxième poussoir 26b parcourt la zone d'aiguillage 72 en restant dans sa position inactive (figure 13).

Puis la came 73 décélère pour retrouver sa première position angulaire α2, et engager le deuxième poussoir 26c de la même manière que le premier poussoir 26a (figure 14).

Chaque poussoir 26 pousse un flan 24 jusqu'au convoyeur 11. Après que le flan a été pris en charge par le convoyeur 11, le poussoir 26 reprend sa position inactive dans la deuxième zone d'extrémité 67 du transporteur 23, par exemple en pivotant par gravité autour de son axe.

A cet effet, le rail 63 comprend une voie auxiliaire 74 débouchant dans la surface de transport S, reliant celle-ci à la deuxième zone d'extrémité 67.

A proximité de cette zone d'extrémité 67, les voies auxiliaire 74, supérieure 68 et inférieure 69 sont localement inclinées vers le bas pour forcer les poussoirs 26 actifs à s'éloigner de la surface de transport S et dégager les flans 24.

Selon un deuxième réglage où l'on diminue la vitesse maximale de rotation de la came 73, celle-ci peut engager un poussoir 26 sur trois. Ce mode de fonctionnement, identique à celui qui vient d'être décrit, est illustré sur les figures 15 à 18.

Bien entendu, on peut régler la cadence de l'installation 1 en augmentant simultanément et progressivement les vitesses de rotation de l'ensemble des moyens d'entraînement.

Ceci est rendu possible par l'utilisation de moteurs à vitesse de rotation réglable ou variable de façon continue, combinée à l'emploi d'un dispositif de commande et d'asservissement apte à synchroniser les moyens d'entraînement et à leur appliquer des profils de vitesse déjà programmés en mémoire.

## Revendications

1. Installation de conditionnement pour former des produits finis tels que des packs à partir de lots (7) d'articles (2), qui comprend:

   - un convoyeur (11) apte à recevoir les lots (7) d'articles (2) successifs pour les acheminer depuis une localisation dite amont vers une localisation dite aval à une vitesse de sortie (VS) sensiblement constante, les faces amont de deux lots (7) successifs étant espacées d'une distance prédéterminée dite pas (P) ;
   - une voie d'avancement (9) le long de laquelle les articles (2) sont acheminés à une vitesse d'entrée (VE) sensiblement constante un à un vers le dit convoyeur (11) en étant juxtaposés les uns aux autres, la vitesse de sortie (VS) étant supérieure à la vitesse d'entrée (VE);
   - des moyens de transfert (14) des articles (2) depuis la voie d'avancement (9) vers le convoyeur (11), et
   - un transporteur (23) apte d'une part à acheminer un par un des flans (24) en carton ou équivalent, posés sensiblement à plat sur le transporteur (23), vers le dit convoyeur (11), et à disposer les flans (24) sur le convoyeur (11) en regard des lots (7) d'articles ;
   - des moyens d'entraînement (13) du convoyeur , (15) des moyens de transfert et (25) du transporteur,

   **caractérisée en ce qu'**elle comprend un dispositif (16) de commande et d'asservissement des moyens d'entraînement (13, 15, 25), apte à appliquer à chaque moyen d'entraînement (13, 15, 25) un profil de vitesse choisi parmi un ensemble pré-programmé de profils de vitesses, pour permettre le réglage automatique du pas (P) et/ou du nombre d'articles (2) par lot (7) en fonction du pas et/ou du type de lot souhaités.

2. Installation selon la revendication 1, **caractérisée en ce que** le dit transporteur (23) comprend des poussoirs (26) des flans (24) agencés successivement sur le transporteur (23), chaque poussoir (26) étant apte à venir en prise avec un flan (24) pour l'acheminer vers le convoyeur (11), la distance entre deux poussoirs (26) successifs en prise avec un flan (24) étant prédéterminée et sensiblement égale au pas (P).

3. Installation selon la revendication 2, **caractérisée en ce qu'**elle comprend en outre des moyens de réglage (57) de la distance entre deux poussoirs (26) successifs en prise avec un flan (24) selon une valeur prédéterminée choisie parmi un groupe de valeurs pré-programmées, toutes multiples d'une même valeur dite module (m).

4. Installation selon l'une des revendications 2 ou 3, **caractérisée en ce que** chaque poussoir (26) est monté mobile entre une position dite inactive où le poussoir (26) est localisé à distance de la surface (S) de transport et ne saille pas de celle-ci, et une position dite active où il saille au moins partiellement de la surface (S) de transport pour venir en prise avec un objet et pousser celui-ci le long de la dite surface (S), de sorte que l'on peut faire varier le nombre de poussoirs (26) simultanément en position active.

5. Installation selon l'une des revendications 2 à 4, **caractérisée en ce qu'**elle comprend:

   - un moyen d'entraînement (25) d'un support mobile (55) des poussoirs;
   - un organe mobile (56) d'actionnement des poussoirs (26) pour les faire passer de leur position inactive à leur position active au niveau de la surface de transport ;
   - un moyen d'entraînement (57) du dit organe d'actionnement (56).

6. Installation selon la revendication 5, **caractérisée en ce que** le dispositif de commande (16) est agencé pour appliquer au moyen d'entraînement (25) de l'organe d'actionnement (56) un profil de vitesse tel que le fonctionnement de l'organe d'actionnement (56) soit périodique, la période de l'organe d'actionnement (56) étant définie comme l'intervalle de temps séparant deux passages successifs de l'organe d'actionnement (56) par une même position.

7. Installation selon l'une des revendications 2 à 6, **caractérisée en ce que** la période du transporteur (23) étant définie comme l'intervalle de temps séparant le passage de deux poussoirs (26) par un même point de la trajectoire, le dispositif de commande (16) est agencé pour que la période de l'organe d'actionnement (56) soit un multiple de la période du transporteur (23).

8. Installation selon l'une des revendications 2 à 7, **caractérisée en ce que** chaque poussoir (26) se présente sous la forme d'une pièce rigide qui comprend une première branche (59) apte à venir en prise avec l'organe d'entraînement (56), ainsi qu'une deuxième branche (60) sensiblement perpendiculaire à la première, apte à saillir au moins en partie de la surface (S) de transport pour venir en prise avec un flan (24).

9. Installation selon l'une des revendications 2 à 8, **caractérisée en ce que** chaque poussoir (26) comprend un axe (62) sensiblement perpendiculaire au plan (P) de convoyage, formant moyen de fixation du poussoir (26) au support (55), et autour duquel le poussoir (26) est apte à pivoter, pour passer de sa position inactive à sa position active, ou réciproquement.

10. Installation selon l'une des revendications 2 à 9, **caractérisée en ce que** le transporteur (23) comprend un rail (63) de guidage qui s'étend sensiblement dans le plan (P) de convoyage, sensiblement le long de la trajectoire définie par le support (55), ledit rail (63) comprenant, sensiblement le long de la surface (S) de transport, une première voie dite supérieure (68) de guidage des poussoirs (26), contiguë à la surface (S) de transport, et une deuxième voie (69) dite inférieure de guidage des poussoirs (26), parallèle à la première.

11. Installation selon la revendication 10, **caractérisée en ce que** chaque poussoir (26) comprend au moins un premier ergot (70), saillant de la première branche (59) sensiblement perpendiculairement au plan (P) de convoyage, apte à coopérer avec la voie inférieure (69) lorsque le poussoir (26) est en position inactive, et avec la voie supérieure (68) lorsque le poussoir (26) est en position active.

12. Installation selon la revendication 11, **caractérisée en ce que** chaque poussoir (26) comprend en outre au moins un deuxième ergot (71), saillant de la deuxième branche (60) perpendiculairement au plan (P) de convoyage, apte à coopérer avec la voie supérieure (68) lorsque le poussoir (26) est en position inactive.

13. Installation selon l'une des revendications 10 à 12, **caractérisée en ce que** le transporteur (23) présente une zone (72) dite d'aiguillage où le rail (63) de guidage est interrompu, et dans laquelle les poussoirs (26) sont aptes à pivoter autour de leur axe (62) pour passer de leur position inactive à leur position active.

**14.** Installation selon la revendication 13, **caractérisée en ce que** l'organe d'actionnement (56) comprend une came (73) étendue sensiblement dans le plan (P) de convoyage à proximité de la dite zone d'aiguillage (72), et entraînée en rotation dans ce plan autour d'un axe sensiblement perpendiculaire à celui-ci par le dit moyen d'entraînement (25), en passant par une première position angulaire ( alpha 1) où la dite came (73) engage au moins l'un des poussoirs (26) pour le faire pivoter autour de son axe depuis sa position inactive vers sa position active lors de son passage par la zone d'aiguillage (72), et une deuxième position angulaire ( alpha 2) où la dite came (73) dégage le poussoir (6).

**15.** Installation selon l'une des revendications 5 à 14, **caractérisée en ce que** le profil de vitesse est choisi parmi un ensemble pré-programmé de profils de vitesse tel que l'organe d'actionnement (56) engage de manière sélective un certain nombre de poussoirs (26) successifs appartenant à un sous-ensemble prédéterminé de l'ensemble des poussoirs (26).

**16.** Installation selon l'une des revendications 1 à 15, **caractérisée en ce que** les articles (2) sont entraînés en continu le long dudit chemin fermé suivant une trajectoire qui suit au moins un quart de la périphérie de l'organe rotatif, de sorte que les organes de préhension (113) puissent entrer en contact avec les articles et les grouper en lots successifs, la vitesse de l'organe rotatif étant supérieure à la vitesse d'entrée (VE) des articles et l'organe rotatif permettant de faire varier le nombre d'articles par lot.

**17.** Installation selon la revendication 16, **caractérisée en ce que** l'organe rotatif des moyens de transfert (14) comprend une roue dentée (114) dont une partie (118) au moins est montée pivotante autour d'un axe (R) de rotation, cette roue (114) étant disposée à proximité de la voie d'alimentation (9) et de la voie d'évacuation (11), cette roue (114) comprenant les dits organes de préhension (113).

**18.** Installation selon la revendication 17, **caractérisée en ce que** lesdits organes de préhension (113) se présentent sous la forme de dents (113) sensiblement régulièrement espacées, saillant radialement de la roue dentée (114), chaque dent (113) décrivant un cercle en passant par une première position angulaire (θE) dans laquelle elle engage au moins un article (2) au poste d'alimentation (109), et une deuxième position angulaire (θS) dans laquelle elle désengage celui-ci au poste d'évacuation (111).

**19.** Installation selon la revendication 18, **caractérisée en ce que** l'écart angulaire entre la première et la deuxième positions angulaires (θE, θS) est compris entre 90 et 180 degrés.

**20.** Installation selon l'une des revendications 17 à 19, **caractérisée en ce que** la dite roue dentée (114) comprend un socle fixe (117) circulaire ainsi qu'un disque rotatif (118), coaxiaux et superposés, entre lesquels sont disposées des branches (120) radiales dont les extrémités libres (123) forment les dites dents (113).

**21.** Installation selon la revendication 20, **caractérisée en ce que** les dites branches (120) sont montées à rotation sur le disque rotatif (118) au moyen de pivots (122) d'axes (R1) parallèles à l'axe (R) de la roue dentée (114).

**22.** Installation selon la revendication 21, **caractérisée en ce que** chaque branche (120) comporte un galet (124) ou un ergot qui coopère avec une gorge (125) ménagée dans le socle (117), cette gorge (125) étant étendue en boucle fermée autour de l'axe (R) de rotation de la roue dentée (114).

**23.** Installation selon la revendication 22, **caractérisée en ce que** la dite gorge (125) est agencée pour que:

- lors du passage de la dent (113) par le poste d'alimentation (109), la branche (120) qui la porte pivote dans le sens contraire de la rotation de la roue (114) pour que la vitesse (VT) de la dent (113) diminue jusqu'à être sensiblement égale à la vitesse d'entrée (VE) lors de l'engagement des articles (2);
- entre le poste d'alimentation (109) et le poste d'évacuation (111), l'orientation de ladite branche (120) est constante par rapport à la roue (114) pour que la vitesse (VT) de la dent (113) augmente jusqu'à être sensiblement égale à la vitesse la roue (114), de sorte que les articles (2) sont groupés en lots (4), accélérés, espacés.

**24.** Installation selon l'une des revendications 1 à 23, **caractérisée en ce qu'**elle comprend en outre des moyens (18) disposés à proximité du poste d'alimentation, aptes à ordonner et cadencer les articles (2) en provenance de la voie d'alimentation (9), pour qu'ils présentent le positionnement et l'écartement voulus au moment de leur préhension par les moyens de transfert (14).

**25.** Installation selon la revendication 24, **caractérisée en ce que** les moyens (18) pour ordonner et cadencer les articles se présentent sous la forme d'une roue étoilée (137), montée pivotante autour d'un axe de rotation (R'), comprenant à sa périphérie une denture (138) apte à engrener et désengrener les articles (2), la denture (138) présentant des logements (139) aptes à recevoir individuellement les articles (2), la vitesse tangentielle de la dite roue étoilée (137) étant sensiblement égale à la vitesse d'entrée (VE).

**26.** Installation selon la revendication 25, **caractérisé en ce qu'**elle comprend un moyen d'entraînement (19) de la dite roue étoilée relié au dispositif de commande (16).

**Claims**

**1.** A packaging facility for forming finished products such as packs from batches (7) of articles (2) which includes:

- one conveyor (11) capable of receiving the successive batches (7) of articles (2) to transport them from a so-called upstream location to a so-called downstream location at a substantially constant discharge speed (VS), the upward faces of two successive batches (7) being separated by a predetermined distance called step (P);
- a feed track (9) along which the articles (2) are transported one by one at a substantially constant inlet speed (VE), towards said conveyor (11), while being placed adjacent to one another, the outlet speed (VS) being higher than the inlet speed (VE);
- articles (2) transfer means (14) from the feed track (9) towards the conveyor (11), including a rotating unit capable of taking and putting together the articles (2) to form separate batches (4), said rotating unit including a sequence of gripping units (113) arranged to engage with articles (2) at a feed station (109) and to disengage them at a discharge station (111), continuously driven along a closed path at a so-called transfer speed (VT) which is higher than or equal to the inlet speed (VE), the transfer means (14) being arranged so that the transfer speed of the gripping units (113) is not constant, such that:

when they are engaged with articles (2) the speed (VT) of the gripping units (113) is substantially equal to the inlet speed (VE):

during the transfer of the articles (2), the speed (VT) of the gripping units (113) is higher than the inlet speed (VE);

when they are disengaged from articles (2) the speed (VT) of the gripping units (113) is substantially equal to the outlet speed (VS); and

- one carrier (23) capable on the one hand to transfer one by one mats (24) made of cardboard or an equivalent material, which are placed substantially flat on the carrier (23), to said conveyor (11) and to place the mats (24) on the conveyor (11) opposite the batches (7) of articles;
- driving means (13) for the conveyor (15), driving means (15) for the transfer means and driving means (25) for the conveyor,

**characterized in that** it includes a device (16) for controlling and servo-controlling the driving means (13, 15, 25), capable of applying to each driving means (13, 15, 25) a speed profile selected among a preprogrammed set of speed profiles in order to allow for the automatic adjustment of the step (P) and / or the number of articles (2) per batch (7), according to the desired step and /or type of batches.

**2.** A facility according to claim 1, **characterized in that** said carrier (23) includes pushing systems (26) for the mats (24) successively arranged on the carrier (23), each pushing system (26) being capable of engaging with a mat (24) to transport it towards the conveyor (11), the distance between two successive pushing systems (26) engaged with a mat (24) being predetermined and substantially equal to the step (P).

**3.** A facility according to claim 2, **characterized in that** it further includes adjustment means (57) for the distance between two successive pushing systems (26) engaged with a mat (24) according to a predetermined value selected among a preprogrammed group of values which are all multiples of the same so-called module (m) value.

**4.** A facility according to one of claims 2 or 3, **characterized in that** each pushing system (26) is mounted movable from a so-called inactive position where the pushing system (26) is located away from the conveying surface (S) and does not protrude therefrom, and a so-called active position where it protrudes at least partially from the conveying surface to engage with an object and push the later along said surface, so that the number of pushing systems (26) which are simultaneously in active position can vary.

5. A facility according to one of claims 2 to 4, **characterized in that** it includes:

   - driving means (25) for a movable support (55) of the pushing systems;
   - a movable unit (56) for activating the pushing systems (26) to switch them from their inactive position to their active position at the conveying surface;
   - driving means (57) for said activating unit (56).

6. A facility according to claim 5, **characterized in that** the control device (16) is arranged to apply to the driving means (25) of the activating unit (56) a profile such that the operation of the activating unit (56) is periodical, the period of the activating unit (56) being defined as the time interval separating two successive passages of the activating unit (56) at the same position.

7. A facility according to any one of claims 2 to 6, **characterized in that** the period of the carrier (23) is defined as the time interval separating the passage of two pushing systems (26) at the same point of the trajectory, the controlling device (16) is arranged so that the period of the activating unit (56) is a multiple of the period of the carrier (23).

8. A facility according to one of claims 2 to 7, **characterized in that** each pushing system (26) is in the form of a rigid part which includes a first branch (59) capable of engaging with the driving unit (56) as well as a second branch (60) which is substantially normal to the first one, capable of protruding at least partly from a transportation surface as to come in engagement with one mat (24).

9. A facility according to one of claims 2 to 8, **characterized in that** each pushing system (26) includes an axis (62) which is substantially normal to the conveying plan (P), and forms a pushing system (26) fixing means (26) to the support (55) and around which the pushing system (26) is capable of pivoting to switch from its inactive position to its active position or vice-versa.

10. A facility according to one of claims 2 to 9, **characterized in that** the carrier (23) includes a guiding rail (63) which substantially extends along the trajectory defined by the support (55), said rail (63) including, substantially along the conveying surface (S), a first so-called upper pushing system (26) guiding track (68) which is adjacent to the conveying surface (S) and a second so-called lower pushing systems (26) guiding track (69), which is parallel to the first one.

11. A facility according to claim 10, **characterized in that** each pushing system (26) includes at least a first pin (70), which protrudes from the first branch (59) substantially normally to the conveying plan (P), capable of cooperating with the lower track (69) when the pushing system (26) is in an inactive position and with the upper track (68) when the pushing system (26) is in active position.

12. A facility according to claim 11, **characterized in that** each pushing system (26) further includes at least a second pin (71) which protrudes from the second branch (60) normally to the conveying plan (P), capable of cooperating with the upper track (68) when the pushing system (26) is in inactive position.

13. A facility according to one of claims 10 to 12, **characterized in that** the carrier (23) has a so-called routing area (72) where the guiding rail (63) is interrupted and wherein the pushing system (26) are capable of pivoting around their axis (62) to switch from their inactive position to the active position.

14. A facility according to claim 13, **characterized in that** the activating unit (56) includes a cam (73) substantially extending in the conveying plan (P) close to the routing area (72) and rotatably driven in this plan around an axis which is substantially normal to the later one, by said driving mean (25), while passing through a first angular position (alpha 1) where said cam (73) engages with at least one pushing system (26) to make it pivot around its axis from its inactive position to its active position during its passage through the routing area (72) and the second angular position (alpha 2) where said cam (73) releases the pushing system (6).

15. A facility to according to one of claims 5 to 14, **characterized in that** the speed profile is selected among pre-programmed set of speed profiles so that the activating unit (56) selectively engages with a certain number of successive pushing systems (26) which belong to a predetermined sub-set of the set of pushing systems (26).

16. A facility according one claims 1 to 15, **characterized** and said in that the articles (2) are continuously driven along said closed path along a trajectory which follows at least a quarter of the periphery of the rotating unit, so that the gripping units (113) can come into contact with the articles and grip them in successive batches, the speed of the rotating unit being higher than the inlet speed (VE) of the articles and the rotating unit being capable of varying the number of articles per a batch.

17. A facility according to claim 16, **characterized in that** the conveying means (14) rotating unit includes a sprocket wheel (114) a part of which (118) at least is pivotably mounted around a rotational axis (R), this wheel (114) being placed close to the feed track (9) and the discharge track (11), such wheel (114) including said gripping units (113).

18. A facility according to claim 17, **characterized in that** said gripping units (113) are in the form of teeth (113) substantially regularly spaced from each other, radially protruding from the sprocket wheel (114), each tooth (113) describing a circle when passing through a first angular position in which it engages at least with one article (2) at the feed station (109) and a second angular position where it disengages fro the latter at the discharge station (111).

19. A facility according to claim 18, **characterized in that** the angular deviation between the first and the second angular positions ($\theta$E,$\theta$S) is between 90 and 180 degrees.

20. A facility according to one of claims 17 to 19, **characterized in that** said sprocket wheel (114) includes a circular fixed base (117) as well as a rotating disc (118) which are coaxial and superimposed, and between which are placed radial branches (120) the free ends (123) of which form said teeth (113).

21. A facility according to claim 20, **characterized in that** said branches (120) are rotatively mounted on the rotating disc (118) using axes (R1) pivots (122) parallel to axis (R) of the sprocket wheel (114).

22. A facility according to claim 21, **characterized in that** each branch (120) includes a roller (124) or a pin which cooperates with a groove (125) arranged in the basis (117), said groove (125) being extended in a closed loop around the sprocket wheel (114) rotation axis (R).

23. A facility according to claim 22, **characterized in that** said groove (125) is arranged so that:

- when the tooth (113) passes through the feed station (109), the branch (120) which carries it pivots in the direction opposite the wheel rotation (114) so that the speed (VT) of the tooth (113) decreases until it is substantially equal to the inlet speed (VE) during the engagement with articles (2);
- between the feed station (109) and the discharge station (111) the direction of said branch (120) is constant with respect to the wheel (114) so that the speed (VT) of the tooth (113) increases until it is substantially equal to the speed of the wheel (114) so that the articles (2) are put together in batches (4), accelerated and separated.

24. A facility according to claims 1 to 23, **characterized in that** it further includes means (18) positioned close to the feed station capable of ordering and giving speed to the articles (2) coming from the feed track (9) so that they are positioned and separated as requested when they are gripped by the transfer means (14).

25. A facility according to claim 24, **characterized in that** the means (18) for ordering and giving speed to the articles are in the form of a star shaped wheel (137) which is pivotably mounted around a rotation axis (R') comprising on its periphery teeth capable of engaging and disengaging with articles (2), the teeth (138) having recesses (139) capable of separately receiving the articles (2), the tangential speed of said star shaped wheel (137) being substantially equal to the inlet speed (VE).

26. A facility according to claim 25, **characterized in that** it includes driving means (19) for said star shaped wheel connected to the control device (16).

**Patentansprüche**

1. Verpackungsanlage zur Bildung von Fertigprodukten wie Packs aus Losen (7) von Artikeln (2), bestehend aus:

- einer Fördervorrichtung (11), die aufeinander folgende Lose (7) von Artikeln (2) aufnehmen kann, um sie mit einer etwa konstanten Ausgangsgeschwindigkeit (VS) ab einem so genannten vorgelagerten Ort zu einem so genannten nachgelagerten Ort zu befördern, wobei die vorgelagerten Seiten von zwei aufeinander folgenden Losen (7) einen vorbestimmten Abstand, eine so genannte Teilung (P) zueinander aufweisen;

- einem Vorschubweg (9) entlang dem die Artikel (2) einzeln und nebeneinander mit einer etwa konstanten Eingangsgeschwindigkeit (VE) zu der genannten Fördervorrichtung (11) befördert werden, wobei die Ausgangsgeschwindigkeit (VS) größer ist als die Eingangsgeschwindigkeit (VE);

- Transfermitteln (14) der Artikel (2) ab dem Vorschubweg (9) zu der Fördervorrichtung (11), bestehend aus einem drehbaren Organ, das die Artikel erfassen und gruppieren kann, um beabstandete Lose (4) zu bilden, wobei das genannte drehbare Organ aus einer Reihe von Ergreifungsorganen (113) besteht, die vorgesehen sind, um die Artikel (2) einem Beschickungsposten (109) zuzuführen und sie einem Austragsposten (111) zu entnehmen, und die im Dauerbetrieb entlang einem geschlossenen Weg mit einer so genannten Transfergeschwindigkeit (VT), die größer oder gleich der Eingangsgeschwindigkeit (VE) ist, angetrieben werden, wobei die Transfermittel (14) so vorgesehen sind, dass die Transfergeschwindigkeit (VT) der Ergreifungsorgane (113) nicht konstant ist, so dass:

. die Geschwindigkeit (VT) der Ergreifungsorgane (113) bei der Zuführung der Artikel (2) etwa gleich der Eingangsgeschwindigkeit (VE) ist;
. die Geschwindigkeit (VT) der Ergreifungsorgane (113) bei dem Transfer der Artikel (2) größer ist als die Eingangsgeschwindigkeit (VE);
. die Geschwindigkeit (VT) der Ergreifungsorgane (113) bei der Entnahme der Artikel (2) etwa gleich der Ausgangsgeschwindigkeit (VS) ist;

- einer Transportvorrichtung (23), die einerseits etwa flach auf der Transportvorrichtung (23) liegende Zuschnitte (24) aus Pappe oder dergleichen einzeln zu der genannten Fördervorrichtung (11) befördern und die Zuschnitte (24) gegenüber den Losen (7) von Artikeln auf die Fördervorrichtung (11) legen kann;
- Antriebsmitteln (13) der Fördervorrichtung, (15), der Transfermittel und (25) der Transportvorrichtung,

**dadurch gekennzeichnet, dass** sie eine Steuer- und Regelvorrichtung (16) der Antriebsmittel (13, 15, 25) umfasst, die jedes Antriebsmittel (13, 15, 25) mit einem aus einer vorprogrammierten Gruppe von Geschwindigkeitsprofilen gewählten Geschwindigkeitsprofil beaufschlagen kann, um die automatische Einstellung der Teilung (P) und/oder der Artikelanzahl (2) je Los (7) entsprechend der gewünschten Teilung und/oder des gewünschten Lostyps zu ermöglichen.

2. Anlage gemäß Anspruch 1, **dadurch gekennzeichnet, dass** die genannte Transportvorrichtung (23) Vordrücker (26) für die hintereinander auf der Transportvorrichtung angeordneten Zuschnitte (24) umfasst, wobei jeder Vordrücker (26) einen Zuschnitt (24) erfassen kann, um ihn zu der Fördervorrichtung (11) zu befördern, wobei der Abstand zwischen zwei aufeinander folgenden, einen Zuschnitt (24) erfassenden Vordrückern (26) vorbestimmt und etwa gleich der Teilung (P) ist.

3. Anlage gemäß Anspruch 2, **dadurch gekennzeichnet, dass** sie ferner Einstellmittel (57) des Abstands zwischen zwei einen Zuschnitt (24) erfassenden Vordrückern (26) gemäß einem vorbestimmten Wert umfasst, der aus einer Gruppe von vorprogrammierten Werten gewählt wird, die alle Mehrfache eines selben Werts, eines so genannten Moduls (m) sind.

4. Anlage gemäß einem der Ansprüche 2 oder 3, **dadurch gekennzeichnet, dass** jeder Vordrücker (26) beweglich montiert ist zwischen einer so genannten inaktiven Position, in der sich der Vordrücker (26) von der Transportfläche (S) entfernt befindet und nicht von dieser absteht, und einer so genannten aktiven Position, in der er mindestens teilweise von der Transportfläche (S) absteht, um ein Objekt zu erfassen und es entlang der genannten Fläche (S) zu drücken, so dass man die Anzahl der sich gleichzeitig in der aktiven Position befindlichen Vordrücker (26) variieren kann.

5. Anlage gemäß einem der Ansprüche 2 bis 4, **dadurch gekennzeichnet, dass** sie umfasst:

- ein Antriebsmittel (25) eines beweglichen Trägers (55) der Vordrücker;
- ein bewegliches Betätigungsorgan (56) der Vordrücker (26), um sie aus ihrer inaktiven Position in ihre aktive Position im Bereich der Transportfläche zu versetzen;
- ein Antriebsmittel (57) des genannten Betätigungsorgans (56).

6. Anlage gemäß Anspruch 5, **dadurch gekennzeichnet, dass** die Steuervorrichtung (16) vorgesehen ist, um das Antriebsmittel (25) des Betätigungsorgans (56) mit einem Geschwindigkeitsprofil zu beaufschlagen, so dass das Betätigungsorgan (56) periodisch funktioniert, wobei die Periode des Betätigungsorgans (56) definiert ist als Zeitintervall zwischen zwei aufeinander folgenden Durchläufen des Betätigungsorgans (56) über eine gleiche Position.

7. Anlage gemäß einem der Ansprüche 2 bis 6, **dadurch gekennzeichnet, dass** da die Periode der Transportvorrichtung (23) definiert ist als Zeitintervall zwischen dem Durchlauf zweier Vordrücker (26) über einen selben Punkt der Bahn, die Steuervorrichtung (16) vorgesehen ist, damit die Periode des Betätigungsorgans (56) ein Mehrfaches der Periode der Transportvorrichtung (23) beträgt.

8. Anlage gemäß einem der Ansprüche 2 bis 7, **dadurch gekennzeichnet, dass** jeder Vordrücker (26) die Form eines starren Teils aufweist, mit einem ersten Schenkel (59), der mit dem Antriebsorgan (56) zusammenwirken kann, sowie mit einem zweiten Schenkel (60), der sich etwa senkrecht zum ersten erstreckt und mindestens teilweise von der Transportfläche (S) abstehen kann, um mit einem Zuschnitt (24) zusammenzuwirken.

9. Anlage gemäß einem der Ansprüche 2 bis 8, **dadurch gekennzeichnet, dass** jeder Vordrücker (26) eine etwa senkrecht zur Förderebene (P) verlaufende Achse (62) umfasst, die ein Befestigungsmittel des Vordrückers (26) am Träger (55) bildet, und um die der Vordrücker (26) schwenken kann, um aus seiner inaktiven Position in seine aktive Position oder umgekehrt zu gehen.

10. Anlage gemäß einem der Ansprüche 2 bis 9, **dadurch gekennzeichnet, dass** die Transportvorrichtung (23) eine Führungsschiene (63) umfasst, die sich etwa in der Förderebene (P), etwa entlang der von dem Träger (55) definierten Bahn erstreckt, wobei die genannte Schiene (63) etwa entlang der Transportfläche (S) einen ersten, so genannten oberen Führungsweg (68) der Vordrücker (26) umfasst, der an die Transportfläche (S) grenzt, und einen zweiten, so genannten unteren Führungsweg (69) der Vordrücker (26), der parallel zum ersten verläuft.

11. Anlage gemäß Anspruch 10, **dadurch gekennzeichnet, dass** jeder Vordrücker (26) mindestens einen ersten Nocken (70) umfasst, der aus dem ersten Schenkel (59) etwa senkrecht zur Förderebene (P) herausragt und mit dem unteren Weg (69) zusammenwirken kann, wenn sich der Vordrücken (26) in der inaktiven Position befindet, und mit dem oberen Weg (68), wenn sich der Vordrücker (26) in der aktiven Position befindet.

12. Anlage gemäß Anspruch 11, **dadurch gekennzeichnet, dass** jeder Vordrücker (26) ferner mindestens einen zweiten Nocken (71) umfasst, der aus dem zweiten Schenkel (60) senkrecht zur Förderebene (P) herausragt und mit dem oberen Weg (68) zusammenwirken kann, wenn sich der Vordrücker (26) in der inaktiven Position befindet.

13. Anlage gemäß einem der Ansprüche 10 bis 12, **dadurch gekennzeichnet, dass** die Transportvorrichtung (23) einen so genannten Weichenbereich (63) aufweist, in dem die Führungsschiene (63) unterbrochen ist und in dem die Vordrücker (26) um ihre Achse (62) schwenken können, um aus ihrer inaktiven Position in ihre aktive Position zu gehen.

14. Anlage gemäß Anspruch 13, **dadurch gekennzeichnet, dass** das Betätigungsorgan (56) einen Nocken (73) umfasst, der sich etwa in der Förderebene (P) in der Nähe des genannten Weichenbereichs (72) erstreckt und dessen Rotation in dieser Ebene um eine etwa senkrecht zu ihm verlaufende Achse von dem genannten Antriebsmittel (25) angetrieben wird, über eine erste Winkelposition (Alpha 1), in der der genannte Nocken (73) mindestens einen der Vordrücker (26) erfasst, um ihn bei seinem Durchgang über den Weichenbereich (72) um seine Achse aus seiner inaktiven Position in seine aktive Position zu verschwenken, und eine zweite Winkelposition (Alpha 2), in der der genannte Nocken (73) den Vordrücker (6) freigibt.

15. Anlage gemäß einem der Ansprüche 5 bis 14, **dadurch gekennzeichnet, dass** das Geschwindigkeitsprofil aus einer vorprogrammierten Gruppe von Geschwindigkeitsprofilen gewählt wird, so dass das Betätigungsorgan (56) eine bestimmte Anzahl von aufeinander folgenden Vordrückern (26) erfasst, die einer vorbestimmten Untergruppe der Gruppe der Vordrücker (26) angehört.

16. Anlage gemäß einem der Ansprüche 1 bis 15, **dadurch gekennzeichnet, dass** die Artikel (2) kontinuierlich entlang dem geschlossenen Weg gemäß einer Bahn mitgenommen werden, die mindestens einem Viertel des Umfangs des drehbaren Organs folgt, so dass die Ergreifungsorgane (113) mit den Artikeln in Kontakt treten und sie zu aufeinander folgenden Losen gruppieren können, wobei die Geschwindigkeit des drehbaren Organs größer ist als die Eingangsgeschwindigkeit (VE) der Artikel, und das drehbare Organe ermöglicht, die Artikelanzahl je Los zu variieren.

**17.** Anlage gemäß Anspruch 16, **dadurch gekennzeichnet, dass** das drehbare Organ der Transfermittel (14) ein Zahnrad (114) umfasst, von dem mindestens ein Teil (118) drehbar um eine Rotationsachse (R) montiert ist, wobei dieses Rad (114) in der Nähe des Beschickungswegs (9) und des Austragswegs (11) angeordnet ist und dieses Rad (114) die genannten Ergreifungsorgane (113) aufweist.

**18.** Anlage gemäß Anspruch 17, **dadurch gekennzeichnet, dass** die genannten Ergreifungsorgane (113) die Form von etwa regelmäßig beabstandeten Zähnen (113) aufweisen, die radial von dem Zahnrad (114) abstehen, wobei jeder Zahn (113) einen Kreis beschreibt und dabei über eine erste Winkelposition ($\square$E) läuft, in der er mindestens einen Artikel (2) am Beschickungsposten (109) erfasst, und über eine zweite Winkelposition ($\square$S), in der er ihn am Austragsposten (111) loslässt.

**19.** Anlage gemäß Anspruch 18, **dadurch gekennzeichnet, dass** der Winkelabstand zwischen der ersten und der zweiten Winkelposition (E, S) zwischen 90 und 180 Grad beträgt.

**20.** Anlage gemäß einem der Ansprüche 17 bis 19, **dadurch gekennzeichnet, dass** das genannte Zahnrad (114) einen festen runden Sockel (117) sowie eine Drehscheibe (118) umfasst, die koaxial und übereinander angeordnet sind, zwischen denen die radialen Schenkel (120) verlaufen, deren freie Enden (123) die genannten Zähne (113) bilden.

**21.** Anlage gemäß Anspruch 20, **dadurch gekennzeichnet, dass** die genannten Schenkel (120) drehbar auf der Drehscheibe (118) montiert sind, mittels Drehzapfen (122) mit zur Achse (R) des Zahnrads (114) parallel verlaufenden Achsen (R1).

**22.** Anlage gemäß Anspruch 21, **dadurch gekennzeichnet, dass** jeder Schenkel (120) eine Rolle (124) oder einen Nocken umfasst, der mit einer in dem Sockel (117) vorgesehenen Kehle (125) zusammenwirkt, wobei sich diese Kehle (125) in geschlossener Schleife um die Rotationsachse (R) des Zahnrads (114) erstreckt.

**23.** Anlage gemäß Anspruch 22, **dadurch gekennzeichnet, dass** die genannte Kehle (125) vorgesehen ist, damit:

- bei dem Durchgang des Zahns (113) über den Beschickungsposten (109) der ihn tragende Schenkel (120) in die der Drehung des Rads (114) entgegen gesetzte Richtung schwenkt, damit die Geschwindigkeit (VT) des Zahns (113) abnimmt, bis sie etwa der Eingangsgeschwindigkeit (VE) beim Erfassen der Artikel (2) entspricht;
- zwischen dem Beschickungsposten (109) und dem Austragsposten (111) die Orientierung des genannten Schenkels (120) in Bezug auf das Rad (114) konstant ist, damit die Geschwindigkeit (VT) des Zahns (113) zunimmt, bis sie etwa der Geschwindigkeit des Rads (114) entspricht, so dass die Artikel (2) zu beschleunigten, beabstandeten Losen (4) gruppiert werden.

**24.** Anlage gemäß einem der Ansprüche 1 bis 23, **dadurch gekennzeichnet, dass** sie ferner Mittel (18) umfasst, die in der Nähe des Beschickungspostens angeordnet sind und die vom Beschickungsweg (9) kommenden Artikel (2) ordnen und takten können, damit sie bei ihrem Ergreifen von den Transfermitteln (14) die gewünschte Positionierung und den gewünschten Abstand aufweisen.

**25.** Anlage gemäß Anspruch 24, **dadurch gekennzeichnet, dass** die Mittel (18) zum Ordnen und Takten der Artikel die Form eines Sternrads (137) aufweisen, das schwenkbar um eine Rotationsachse (R') montiert ist und an seinem Umfang eine Verzahnung (138) aufweist, die die Artikel in und außer Eingriff bringen kann, wobei die Verzahnung (138) Aufnahmen (139) aufweist, die die Artikel (2) einzeln aufnehmen können, wobei die tangentiale Geschwindigkeit des genannten Sternrads (137) etwa gleich der Eingangsgeschwindigkeit (VE) ist.

**26.** Anlage gemäß Anspruch 25, **dadurch gekennzeichnet, dass** sie ein Antriebsmittel (19) des genannten Sternrads umfasst, das mit der Steuervorrichtung (16) verbunden ist.

FIG. 1

EP 1 116 676 B1

FIG. 2

EP 1 116 676 B1

FIG. 3

FIG.4

FIG.5

FIG. 6.

FIG. 7

FIG. 8

FIG. 1 9

FIG. 9

FIG. 10

EP 1 116 676 B1

FIG. 11

FIG. 12

FIG. 13

FIG. 14

EP 1 116 676 B1

FIG. 1 5

FIG. 1 6

FIG. 1 7

FIG. 1 8

EP 1 116 676 B1

**EP 1 116 676 B1**

**RÉFÉRENCES CITÉES DANS LA DESCRIPTION**

**Documents brevets cités dans la description**

- GB 974995 A

- US 5979147 A